(19) Europäisches Patentamt
European Patent Office
Office européen des brevets

(11) EP 4 694 001 A1

(12) **EUROPEAN PATENT APPLICATION**
published in accordance with Art. 153(4) EPC

(43) Date of publication:
**11.02.2026 Bulletin 2026/07**

(21) Application number: **24784157.0**

(22) Date of filing: **28.03.2024**

(51) International Patent Classification (IPC):
**H04L 5/00** (2006.01)

(52) Cooperative Patent Classification (CPC):
**H04L 5/00; H04W 72/044; H04W 72/23;
H04W 74/00; H04W 74/0833**

(86) International application number:
**PCT/CN2024/084339**

(87) International publication number:
**WO 2024/208072 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310401607**

(71) Applicant: **Huawei Technologies Co., Ltd.
Shenzhen, Guangdong 518129 (CN)**

(72) Inventors:
• **LI, Jun
  Shenzhen, Guangdong 518129 (CN)**
• **JIAO, Shurong
  Shenzhen, Guangdong 518129 (CN)**

(74) Representative: **Isarpatent
Patent- und Rechtsanwälte Partg mbB
Friedrichstraße 31
80801 München (DE)**

(54) **COMMUNICATION METHOD AND RELATED APPARATUS**

(57)     A communication method and a related apparatus are provided. The method includes: receiving configuration information from a radio access network device, where the configuration information is for configuring a quantity K of ROs in one RO group, and K is an integer greater than 1; and determining the K ROs based on the configuration information, where the K ROs are all associated with a same SSB index, the K ROs include at least two ROs, and the at least two ROs are further associated with different SSB indexes. In this way, even if a quantity of indexes of SSBs sent by the radio access network device is not an integer multiple of a configured quantity of SSB indexes associated with one RO and the configured quantity is configured by the radio access network device, the K ROs may be determined based on the foregoing solution. In other words, a quantity of SSBs sent by the radio access network device does not need to be limited. In this way, the radio access network device can flexibly adjust the quantity of sent SSBs based on a requirement.

FIG. 4

## Description

This application claims priority to Chinese Patent Application No. 202310401607.X, filed with the China National Intellectual Property Administration on April 7, 2023 and entitled "COMMUNICATION METHOD AND RELATED APPARATUS", which is incorporated herein by reference in its entirety.

## TECHNICAL FIELD

This application relates to the communication field, and in particular, to a communication method and a related apparatus.

## BACKGROUND

To establish a connection to a network, a terminal usually needs to initiate random access to a radio access network device. For example, the terminal measures synchronization signal blocks (synchronization signal blocks, SSBs) sent by the radio access network device, and selects a random access channel occasion (random access channel occasion, RO) associated with an SSB with high signal strength, to send a preamble (preamble) associated with the SSB. To increase uplink coverage of a physical random access channel (physical random access channel, PRACH), PRACH repetition may be performed. For example, a quantity of repetitions is 2, and the quantity of repetitions is a quantity of ROs in one RO group. In this case, two ROs associated with a same SSB index may be used as one group (which may be referred to as an RO group), and then a preamble associated with the SSB is sent to increase the coverage of the PRACH.

Currently, SSB indexes associated with different ROs are fixed, so that the radio access network device can perform combined decoding based on a preamble received in different ROs. However, this may limit a quantity of SSBs. For example, a quantity of indexes of SSBs (for example, SSBs sent in half a radio frame) sent by the radio access network device is required to be an integer multiple of a quantity of SSB indexes associated with one RO. Consequently, the quantity of SSBs sent by the radio access network device cannot be flexibly adjusted based on a requirement.

## SUMMARY

This application provides a communication method and a related apparatus, so that a radio access network device can flexibly adjust a quantity of sent SSBs based on a requirement, and coverage performance of an uplink PRACH can also be improved.

According to a first aspect, this application provides a communication method. The method may be performed by a terminal, may be performed by a component (for example, a chip or a chip system) configured in the terminal, or may be implemented by a logical module or software that can implement all or some functions of the terminal. This is not limited in this application.

For example, the method includes: receiving configuration information from a radio access network device, where the configuration information is for configuring a quantity K of ROs in one RO group, and K is an integer greater than 1; and determining the K ROs based on the configuration information, where the K ROs are all associated with a same SSB index, the K ROs include at least two ROs, and the at least two ROs are further associated with different SSB indexes.

In the foregoing technical solution, when the K ROs are determined, the K ROs that are all associated with the same SSB index are selected, and the K ROs include the at least two ROs that are further associated with different SSB indexes. In other words, the K ROs are all associated with the same SSB index, and include two ROs that are further associated with different SSB indexes. Whether SSB indexes further associated with ROs other than the two ROs in the K ROs are the same is not limited in this application. In this way, regardless of whether a quantity of indexes of SSBs (for example, SSBs sent in half a radio frame) sent by the radio access network device is an integer multiple of a configured quantity of SSB indexes associated with one RO and the configured quantity is configured by the radio access network device, the K ROs may be determined. In other words, a quantity of SSBs sent by the radio access network device does not need to be limited, and the radio access network device can flexibly adjust the quantity of sent SSBs based on a requirement, and can also determine the K ROs, thereby improving coverage performance of an uplink PRACH.

Optionally, the terminal may further send a preamble in the K ROs.

According to a second aspect, this application provides a communication method. The method may be performed by a radio access network device, may be performed by a component (for example, a chip or a chip system) configured in the radio access network device, or may be implemented by a logical module or software that can implement all or some functions of the radio access network device. This is not limited in this application.

For example, the method includes: sending configuration information to a terminal, where the configuration information is for configuring a quantity K of ROs in one RO group, and K is an integer greater than 1; determining the K ROs based on the configuration information, where the K ROs are all associated with a same SSB index, the K ROs include at least two ROs, and the at least two ROs are further associated with different SSB indexes; and receiving a preamble in the K ROs.

In the foregoing technical solution, when the K ROs are determined, the K ROs that are all associated with the same SSB index are selected, and the K ROs include the at least two ROs that are further associated with different SSB indexes. In other words, the K ROs are all associated with the same SSB index, and include two ROs that are further associated with different SSB indexes. Whether SSB indexes further associated with ROs other than the two ROs in the K ROs are the same is not limited in this application. In this way, regardless of whether a quantity of indexes of SSBs (for example, SSBs sent in half a radio frame) sent by the radio access network device is an integer multiple of a configured quantity of SSB indexes associated with one RO, where the configured quantity is configured by the radio access network device, the K ROs may be determined. In other words, a quantity of SSBs sent by the radio access network device does not need to be limited, and the radio access network device can flexibly adjust the quantity of sent SSBs based on a requirement, and can also determine the K ROs, thereby improving coverage performance of an uplink PRACH.

With reference to the first aspect and the second aspect, in some possible implementations, the same SSB index is a first SSB index, a preamble associated with the first SSB index in a first RO is different from a preamble associated with the first SSB index in a second RO, the preamble associated with the first SSB index in the first RO is in one-to-one correspondence with the preamble associated with the first SSB index in the second RO, and the K ROs include the first RO and the second RO.

It is not difficult to understand that, when a quantity of indexes of a plurality of SSBs sent by the radio access network device is not an integer multiple of a configured quantity of SSB indexes associated with one RO and the configured quantity is configured by the radio access network device, because a position of the first SSB index in the first RO may be different from a position of the first SSB index in the second RO, the preamble associated with the first SSB index in the first RO is different from the preamble associated with the first SSB index in the second RO. In this case, in a possible design, although the preamble associated with the first SSB index in the first RO is different from the preamble associated with the first SSB index in the second RO, the preamble associated with the first SSB index in the first RO is in one-to-one correspondence with the preamble associated with the first SSB index in the second RO, that is, a correspondence exists between the preamble associated with the first SSB index in the first RO and the preamble associated with the first SSB index in the second RO, so that the radio access network device can determine the preamble associated with the first SSB index in the second RO based on the preamble associated with the first SSB index in the first RO.

In this application, a position of an SSB index in an RO may be understood as a sorted position of the SSB index in a plurality of SSB indexes when the RO is associated with the plurality of SSB indexes. In other words, the SSB index is a specific SSB index in the plurality of SSB indexes, and the specific SSB index may be numbered from 1, or may be numbered from 0. This is not limited in this application.

By way of example rather than limitation, when a preamble associated with the first SSB index in the first RO is an $i^{th}$ preamble, an index of the preamble associated with the first SSB index in the second RO is $N_{preamble}^{total}/N+i$, where i is an integer greater than or equal to 0, $N_{preamble}^{total}$ represents a total quantity of preambles, and N represents a configured quantity of SSB indexes associated with one RO, where the configured quantity is configured by the radio access network device. The $i^{th}$ preamble is an $i^{th}$ preamble in R preambles associated with the first SSB index in the first RO, R is a quantity of preambles associated with the first SSB index in the first RO, and $0 \leq i \leq R-1$.

It may be understood that, another function mapping relationship may alternatively exist between the preamble associated with the first SSB index in the first RO and the preamble associated with the first SSB index in the second RO. This is not limited in this application.

With reference to the first aspect and the second aspect, in some possible implementations, the same SSB index is a first SSB index, a preamble associated with the first SSB index in a third RO is the same as a preamble associated with the first SSB index in a fourth RO, and the third RO and the fourth RO are any two ROs in the K ROs.

When a quantity of indexes of a plurality of SSBs sent by the radio access network device is not an integer multiple of a configured quantity of SSB indexes associated with one RO and the configured quantity is configured by the radio access network device, even if a position of the first SSB index in a first RO is different from a position of the first SSB index in a second RO, the preamble associated with the first SSB index in the third RO is the same as the preamble associated with the first SSB index in the fourth RO, so that the radio access network device can perform combined decoding on the preamble associated with the first SSB index in the third RO and the preamble associated with the first SSB index in the fourth RO.

How to make the preamble associated with the first SSB index in the third RO the same as the preamble associated with the first SSB index in the fourth RO includes the following several possible designs.

In a first possible design, indexes of the plurality of SSBs sent by the radio access network device are in one-to-one correspondence with a plurality of preamble groups, the preamble associated with the first SSB index in the third RO belongs to a first preamble group, the preamble associated with the first SSB index in the fourth RO belongs to the first preamble group, and the first preamble group is a preamble group corresponding to the first SSB index in the plurality of preamble groups.

In other words, a quantity of preamble groups is the same as a quantity of indexes of the plurality of SSBs sent by the radio access network device, each SSB index corresponds to one preamble group, and both the preamble associated with the first SSB index in the third RO and the preamble associated with the first SSB index in the fourth RO belong to the preamble group corresponding to the first SSB index.

In a second possible design, a preamble associated with a same SSB index in the K ROs is determined based on a preamble associated with the same SSB index in a $1^{st}$ RO, and the $1^{st}$ RO is an RO at an earliest time domain position in the K ROs.

The RO at the earliest time domain position in the K ROs may be understood as a $1^{st}$ RO for repetition (repetition) in the K ROs, or an RO that occupies an earliest time domain symbol in the K ROs.

In the second possible design, the K ROs belong to a first RO group, a second RO group corresponding to a second SSB index in the indexes of the plurality of SSBs sent by the radio access network device is invalid, and the second RO group meets the following condition: A preamble associated with the second SSB index in the second RO group is the same as a preamble associated with a first SSB index in the first RO group, and the second RO group and the first RO group include at least one same RO.

That the second RO group is invalid may be understood as that no repeated preamble is sent in an RO in the second RO group, or the second RO group cannot be used for repetition.

In a third possible design, a preamble group corresponding to each SSB index associated with a fifth RO is related to the SSB index, a larger SSB index indicates a larger index of a preamble group corresponding to the SSB index, an index of each preamble group indicates an index of a $1^{st}$ preamble in the preamble group, and the fifth RO is any one of the K ROs.

In other words, an index of a preamble group is determined based on an SSB index, and a larger SSB index indicates a larger index of a preamble group corresponding to the SSB index. By way of example rather than limitation, if SSB indexes associated with the fifth RO include 0 to 2, an index of a preamble group corresponding to an SSB 0 is 0, an index of a preamble group corresponding to an SSB 1 is 1, and an index of a preamble group corresponding to an SSB 2 is 2. If SSB indexes associated with the fifth RO include 0, 1, and 3, an index of a preamble group corresponding to an SSB 0 is 0, an index of a preamble group corresponding to an SSB 1 is 1, and an index of a preamble group corresponding to an SSB 3 is 2.

With reference to the first aspect and the second aspect, in some possible implementations, the K ROs include at least two ROs, and the at least two ROs are further associated with different quantities of SSB indexes.

The K ROs may include two ROs that are further associated with different quantities of SSB indexes. For example, the K ROs include an RO 1 and an RO 2, SSB indexes associated with the RO 1 include 1, 2, 3, and 4, and SSB indexes associated with the RO 2 include 4, 5, and 6. In this case, in addition to being associated with a same SSB index (for example, 4) by the RO 1 and the RO 2, the RO 1 is further associated with three SSB indexes (for example, 1, 2, and 3), and the RO 2 is further associated with two SSB indexes (for example, 5 and 6). It may be understood that, the RO 1 is further associated with some SSB indexes, but the SSB indexes are not associated with the RO 2. Similarly, the RO 2 is further associated with some SSB indexes, but the SSB indexes are not associated with the RO 1. For another example, the K ROs include an RO 1 and an RO 2, SSB indexes associated with the RO 1 include 4, 5, 0, and 1, and SSB indexes associated with the RO 2 include 4 and 5. In this case, in addition to being associated with same SSB indexes (for example, 4 and 5) by the RO 1 and the RO 2, the RO 1 is further associated with two SSB indexes (for example, 0 and 1). In this case, only the RO 1 is further associated with some SSB indexes, but the SSB indexes are not associated with the RO 2.

With reference to the first aspect and the second aspect, in some possible implementations, a quantity of indexes of a plurality of SSBs sent by the radio access network device is not an integer multiple of a configured quantity of SSB indexes associated with one RO and the configured quantity is configured by the radio access network device.

It may be understood that, the solution provided in this application is applicable to a scenario in which a quantity of indexes of the plurality of SSBs sent by the radio access network device is not an integer multiple of a configured quantity of SSB indexes associated with one RO and the configured quantity is configured by the radio access network device. More specifically, the radio access network device may configure a quantity of SSB indexes associated with one RO for the terminal. However, when the terminal performs actual association, the following two possible scenarios exist: In one possible scenario, when a configured quantity of SSB indexes associated with one RO is N and the configured quantity is configured by the radio access network device, a quantity of SSB indexes associated with each of the K ROs is N. In other words, a quantity of SSB indexes actually associated with one RO is a configured quantity of SSB indexes associated with one RO and the configured quantity is configured by the radio access network device.

In the other possible scenario, when a configured quantity of SSB indexes associated with one RO is N and the configured quantity is configured by the radio access network device, the K ROs include an RO whose quantity of associated SSB indexes is less than N. In other words, the K ROs may include a RO whose quantity of actually associated SSB indexes is less than a configured quantity of SSB indexes associated with one RO, where the configured quantity is configured by the radio access network device.

According to a third aspect, this application provides a communication method. The method may be performed by a terminal, may be performed by a component (for example, a chip or a chip system) configured in the terminal, or may be implemented by a logical module or software that can implement all or some functions of the terminal. This is not limited in this application.

For example, the method includes: receiving configuration information from a radio access network device, where the configuration information is for configuring a quantity K of ROs in one RO group, and K is an integer greater than 1; and determining the K ROs based on the configuration information, where SSB indexes associated with all the K ROs are completely the same.

In the foregoing technical solution, when the K ROs are determined, ROs associated with completely a same SSB index are selected. In other words, the K ROs are all associated with completely the same SSB index (including that quantities of associated SSB indexes are the same and values of the associated SSB indexes are completely the same). In this way, a method for determining the K ROs is provided. In this way, regardless of whether a quantity of indexes of SSBs (for example, SSBs sent in half a radio frame) sent by the radio access network device is an integer multiple of a configured quantity of SSB indexes associated with one RO and the configured quantity is configured by the radio access network device, the K ROs may be determined. In other words, the radio access network device can flexibly adjust the quantity of sent SSBs based on a requirement, and can also determine the K ROs, thereby improving coverage performance of an uplink PRACH.

According to a fourth aspect, this application provides a communication method. The method may be performed by a radio access network device, may be performed by a component (for example, a chip or a chip system) configured in the radio access network device, or may be implemented by a logical module or software that can implement all or some functions of the radio access network device. This is not limited in this application.

For example, the method includes: sending configuration information to a terminal, where the configuration information is for configuring a quantity K of ROs in one RO group, and K is an integer greater than 1; determining the K ROs based on the configuration information, where SSB indexes associated with all the K ROs are completely the same; and receiving a preamble in the K ROs.

In the foregoing technical solution, when the K ROs are determined, ROs associated with completely a same SSB index are selected. In other words, the K ROs are all associated with completely the same SSB index (including that quantities of associated SSB indexes are the same and values of the associated SSB indexes are completely the same). In this way, a method for determining the K ROs is provided. In this way, regardless of whether a quantity of indexes of SSBs (for example, SSBs sent in half a radio frame) sent by the radio access network device is an integer multiple of a configured quantity of SSB indexes associated with one RO and the configured quantity is configured by the radio access network device, the K ROs may be determined. Correspondingly, the radio access network device can flexibly adjust the quantity of sent SSBs based on a requirement, and can also determine the K ROs, thereby improving coverage performance of an uplink PRACH.

With reference to the third aspect and the fourth aspect, in some possible implementations, a quantity of SSB indexes associated with each of the K ROs is equal to a configured quantity of SSB indexes associated with one RO and the configured quantity is configured by the radio access network device.

In other words, when the K ROs are determined, a RO whose quantity of associated SSB indexes is equal to a configured quantity of SSB indexes associated with one RO is selected, where the configured quantity is configured by the radio access network device, and SSB indexes associated with all the K ROs are completely the same.

For a RO whose quantity of associated SSB indexes is less than a configured quantity of SSB indexes associated with one RO, where the configured quantity is configured by the radio access network device, the following two possible designs are provided.

In one possible design, when a quantity of SSB indexes associated with a sixth RO is less than a configured quantity of SSB indexes associated with one RO, where the configured quantity is configured by the radio access network device, the sixth RO does not belong to the K ROs. In other words, an RO whose quantity of associated SSB indexes is less than a configured quantity of SSB indexes associated with one RO does not belong to the K ROs, or an RO whose quantity of associated SSB indexes is less than the configured quantity of SSB indexes associated with one RO does not form any RO group, where the configured quantity is configured by the radio access network device.

In the other possible design, a quantity of SSB indexes associated with each of the K ROs is less than a configured quantity of SSB indexes associated with one RO, where the configured quantity is configured by the radio access network device, and quantities of SSB indexes associated with all the K ROs are the same. In other words, for an RO whose quantity of associated SSB indexes is less than a configured quantity of SSB indexes associated with one RO, where the configured quantity is configured by the radio access network device, an RO that is associated with a same quantity of SSB indexes and completely same associated SSB indexes as the RO needs to be found to form the K ROs, or to form an RO group.

With reference to the third aspect and the fourth aspect, in some possible implementations, a quantity of indexes of a plurality of SSBs sent by the radio access network device is not an integer multiple of a configured quantity of SSB indexes associated with one RO and the configured quantity is configured by the radio access network device.

According to a fifth aspect, this application provides a communication method. The method may be performed by a terminal, may be performed by a component (for example, a chip or a chip system) configured in the terminal, or may be implemented by a logical module or software that can implement all or some functions of the terminal. This is not limited in this application.

For example, the method includes: receiving configuration information from a radio access network device, where the configuration information is for configuring a quantity K of ROs in one RO group, and K is an integer greater than 1; and determining the K ROs based on the configuration information, where SSB indexes associated with all the K ROs are completely the same, the SSB indexes associated with the K ROs are indexes of some SSBs in a plurality of SSBs sent by the radio access network device, and a quantity of SSBs in the some SSBs is a maximum integer multiple of a configured quantity of SSB indexes associated with one RO, where the configured quantity is configured by the radio access network device.

In the foregoing technical solution, when a quantity of the plurality of SSBs sent by the radio access network device is not an integer multiple of a configured quantity of SSB indexes associated with one RO and the configured quantity is configured by the radio access network device, SSB indexes associated with ROs are indexes of some SSBs in the plurality of SSBs, and a quantity of SSBs in the some SSBs is a maximum integer multiple of the configured quantity. In other words, PRACH repetition is performed only for the some SSBs. In this way, positions of SSB indexes in different ROs are fixed, and the K ROs may be determined in an existing manner. In this way, regardless of whether a quantity of indexes of the SSBs (for example, SSBs sent in half a radio frame) sent by the radio access network device is an integer multiple of a configured quantity that is of SSB indexes associated with one RO and the configured quantity is configured by the radio access network device, the K ROs may be determined. Correspondingly, the radio access network device can flexibly adjust the quantity of sent SSBs based on a requirement, and can also determine the K ROs, thereby improving coverage performance of an uplink PRACH.

According to a sixth aspect, this application provides a communication method. The method may be performed by a radio access network device, may be performed by a component (for example, a chip or a chip system) configured in the radio access network device, or may be implemented by a logical module or software that can implement all or some functions of the radio access network device. This is not limited in this application.

For example, the method includes: sending configuration information to a terminal, where the configuration information is for configuring a quantity K of ROs in one RO group, and K is an integer greater than 1; and determining the K ROs based on the configuration information, where SSB indexes associated with all the K ROs are completely the same, the SSB indexes associated with the K ROs are indexes of some SSBs in a plurality of SSBs sent by the radio access network device, and a quantity of SSBs in the some SSBs is a maximum integer multiple of a configured quantity of SSB indexes associated with one RO, where the configured quantity is configured by the radio access network device.

In the foregoing technical solution, when a quantity of the plurality of SSBs sent by the radio access network device is not an integer multiple of a configured quantity of SSB indexes associated with one RO and the configured quantity is configured by the radio access network device, SSB indexes associated with ROs are indexes of some SSBs in the plurality of SSBs, and a quantity of SSBs in the some SSBs is a maximum integer multiple of the configured quantity In other words, PRACH repetition is performed only for the some SSBs. In this way, positions of SSB indexes in different ROs are fixed, and the K ROs may be determined in an existing manner. In this way, regardless of whether a quantity of indexes of the SSBs (for example, SSBs sent in half a radio frame) sent by the radio access network device is an integer multiple of a quantity that is of SSB indexes associated with one RO and the configured quantity is configured by the radio access network device, the K ROs may be determined. Correspondingly, the radio access network device can flexibly adjust the quantity of sent SSBs based on a requirement, and can also determine the K ROs, thereby improving coverage performance of an uplink PRACH.

According to a seventh aspect, this application provides a communication apparatus, to implement the method according to any one of the first aspect to the sixth aspect and the possible implementations of the first aspect to the sixth aspect. The apparatus includes corresponding units configured to perform the foregoing method. The units included in the apparatus may be implemented by software and/or hardware.

According to an eighth aspect, this application provides a communication apparatus. The apparatus includes a processor. The processor may be configured to execute a computer program in a memory, to implement the method according to any one of the first aspect to the sixth aspect and the possible implementations of the first aspect to the sixth aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, or a communication interface of another type.

Optionally, the communication apparatus further includes the memory, and the processor is coupled to the memory. The memory is configured to store program instructions and data.

According to a ninth aspect, this application provides a computer-readable storage medium. The computer storage medium stores a computer program or instructions, and when the computer program or the instructions are run on a computer, the method according to any one of the first aspect to the sixth aspect and the possible implementations of the first aspect to the sixth aspect is performed.

According to a tenth aspect, this application provides a computer program product. The computer program product includes a computer program (which may also be referred to as code or instructions), and when the computer program is run, the method according to any one of the first aspect to the sixth aspect and the possible implementations of the first aspect to the sixth aspect is performed.

According to an eleventh aspect, this application provides a chip system. The chip system includes at least one processor, configured to support implementation of a function in any one of the first aspect to the sixth aspect and the possible implementations of the first aspect to the sixth aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete device.

According to a twelfth aspect, this application provides a communication system, including the foregoing terminal and the foregoing radio access network device.

Optionally, the terminal may be configured to implement the method according to any one of the first aspect and the possible implementations of the first aspect, and the radio access network device may be configured to implement the method according to any one of the second aspect and the possible implementations of the second aspect.

Optionally, the terminal may be configured to implement the method according to any one of the third aspect and the possible implementations of the third aspect, and the radio access network device may be configured to implement the method according to any one of the fourth aspect and the possible implementations of the fourth aspect.

Optionally, the terminal may be configured to implement the method according to the fifth aspect, and the radio access network device may be configured to implement the method according to the sixth aspect.

It should be understood that, technical solutions of the seventh aspect to the twelfth aspect of this application correspond to those of the first aspect to the sixth aspect of this application, and beneficial effects achieved by the aspects and corresponding feasible implementations are similar. Details are not described again.

## BRIEF DESCRIPTION OF DRAWINGS

FIG. 1 is a diagram of an architecture of a communication system applicable to a method according to an embodiment of this application;

FIG. 2 is a diagram of an association relationship between an SSB index and an RO according to an embodiment of this application;

FIG. 3 is a diagram of a preamble associated with each SSB in one RO according to an embodiment of this application;

FIG. 4 is a schematic flowchart of a communication method according to an embodiment of this application;

FIG. 5 is a diagram of an SSB index associated with an RO according to an embodiment of this application;

FIG. 6 is another diagram of an SSB index associated with an RO according to an embodiment of this application;

FIG. 7 is a diagram of preambles associated with different SSBs according to an embodiment of this application;

FIG. 8 is another diagram of preambles associated with different SSBs according to an embodiment of this application;

FIG. 9 is a diagram in which two ROs are associated with different quantities of SSB indexes according to an embodiment of this application;

FIG. 10 is a block diagram of a communication apparatus according to an embodiment of this application;

FIG. 11 is another block diagram of a communication apparatus according to an embodiment of this application;

FIG. 12 is a diagram of a possible structure of a terminal according to an embodiment of this application; and

FIG. 13 is a diagram of a structure of a radio access network device according to an embodiment of this application.

## DESCRIPTION OF EMBODIMENTS

The following describes technical solutions of this application with reference to accompanying drawings.

To facilitate understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, a "first SSB index" may represent an index of one or more SSBs in a plurality of SSBs received by a terminal, and does not represent an index of a 1st SSB. Correspondingly, a "first RO group" represents an RO group corresponding to the first SSB index, does not represent a 1st RO group, and does not limit a quantity of RO groups. For another example, the "first SSB index" and a "second SSB index" are merely SSB indexes that are defined differently, and there is no time sequence relationship or a value relationship between the two.

Second, in embodiments of this application, "at least one" means one or more, and "a plurality of" means two or more. "And/or" describes an association relationship between associated objects, and indicates that three relationships may exist. For example, A and/or B may represent the following three cases: Only A exists, both A and B exist, and only B exists, where A and B may be in a singular form or a plural form. The character "/" usually represents an "or" relationship between the associated objects, but does not exclude an "and" relationship between the associated objects. A specific meaning represented by the character "/" may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Third, in embodiments of this application, both "when" and "if" mean that an apparatus performs corresponding processing in an objective situation, are not intended to limit time, do not require the apparatus to necessarily have a determining action during implementation, and do not mean another limitation.

Fourth, in embodiments of this application, "B corresponding to A" or "B that corresponds to A" represents that B is associated with A. "Determining B based on A" does not mean that B is determined based only on A, and B may alternatively be determined based on A and/or other information.

Fifth, predefinition in this application may be understood as definition, predefinition, storage, prestorage, pre-negotiation, pre-configuration, solidifying, or pre-burning.

Configuration by a radio access network device in this application may be understood as: The radio access network device sends signaling to the terminal for configuration. For example, the radio access network device sends configuration information to the terminal. The configuration information may be for configuring a quantity of SSB indexes associated with one RO, a quantity of ROs in one RO group, and the like. The RO group is a set of ROs for PRACH repetition.

Fifth, in this application, a 1st RO for repetition is a 1st RO in ROs for repetitions. For example, K ROs include an RO 1, an RO 2, and an RO 3. The RO 1 is the 1st RO for repetition, and the RO 2 is not the 1st RO for repetition.

Sixth, symbols in embodiments of this application and explanations of the symbols are as follows:

$N_{Tx}^{SSB}$ represents a quantity of SSBs sent by the radio access network device (for example, a quantity of SSBs sent by the radio access network device in half a radio frame). $N_{Tx}^{SSB}$ is a positive integer, and may be understood as a quantity of SSB indexes.

N represents a quantity of SSB indexes associated with one RO. N may be an integer greater than or equal to 2, for example, 2, 4, 8, or 16.

R represents a quantity of preambles associated with one SSB index. R is a positive integer, and R is less than or equal to $N_{preamble}^{total}$.

n represents a preamble group index, and indicates an index of a 1st preamble in one preamble group. n is an integer greater than or equal to 0. $N_{preamble}^{total}$ represents a total quantity of preambles. $N_{preamble}^{total}$ is a positive integer.

K represents a quantity that is of ROs in one RO group and that is configured by the radio access network device. K is an integer greater than 1. For example, K may be 2, 4, or 8.

Seventh, in this application, association may also be understood as mapping, correspondence, or the like. For example, an SSB index associated with a first RO may be understood as the SSB index to which the first RO is mapped, or the SSB index corresponding to the first RO. For another example, a preamble associated with a first SSB index in the first RO may be understood as the preamble to which the first SSB index is mapped in the first RO, or the preamble corresponding to the first SSB index in the first RO. For example, a preamble associated with the first SSB index may be understood as the preamble corresponding to the first SSB index.

In addition, an SSB index associated with an RO may be understood as an index of an SSB associated with the RO.

Eighth, in this application, that preambles are the same may be understood as that indexes of the preambles are the same, or sequences of the preambles are the same. That SSB indexes are the same may be understood as that beam directions of SSBs are the same, or the like. However, time-frequency resources occupied by the SSBs are not limited.

Ninth, in this application, the quantity that is of ROs in one RO group and that is configured by the radio access network device is K, and the K ROs may form one RO group. Therefore, the terminal and/or the radio access network device may determine the K ROs based on the configuration information, which may also be referred to as determining the RO group. The RO group includes the K ROs. In addition, a name of the RO group is not limited in this application. In other embodiments, the RO group may also be referred to as an RO set (set). This is not limited in this application. The RO group is used for PRACH repetition, and K may be understood as a quantity of PRACH repetitions.

Tenth, the solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) mobile communication system, a new radio (new radio, NR) system or another evolved communication system, a next generation mobile communication system beyond a 5G communication system, a 6th generation (6th generation, 6G) communication system, and a future communication system.

In embodiments of this application, the radio access network (radio access network, RAN) device may be a device having a wireless transceiver function. The radio access network device may be a device that provides a wireless communication function service, is usually located on a network side, and includes but is not limited to: a next generation base station (gNodeB, gNB) in the 5G generation communication system; a next generation base station in the 6G generation mobile communication system; a base station in the future mobile communication system; an evolved NodeB (evolved NodeB, eNB), a radio network controller (radio network controller, RNC), a NodeB (NodeB, NB), a base station controller (base station controller, BSC), a home base station (home evolved NodeB, or home NodeB, HNB), a baseband unit (baseband unit, BBU), a transmission reception point (transmission reception point, TRP), a transmitting point (transmitting point, TP), a base transceiver station (base transceiver station, BTS), and the like in the LTE system; and an access node, a wireless relay node, a wireless backhaul node, and the like in a wireless fidelity (wireless fidelity, Wi-Fi) system. Alternatively, the radio access network device may be a radio controller in a cloud radio access network (cloud radio access network, CRAN) scenario, a relay station, a vehicle-mounted device, a wearable device, a network device in a future evolved network, or the like.

In a network structure, the radio access network device may coordinate a plurality of RAN nodes to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The radio access network device may be deployed on the land, including an indoor or outdoor device; or may be deployed in the air, for example, on an airplane, a balloon, or a satellite.

In embodiments of this application, an apparatus configured to implement a function of a radio access network may be a radio access network device, or may be an apparatus that can support the radio access network device in implementing the corresponding function, for example, a chip system, a communication module, or a modem. The apparatus may be installed in the radio access network device. The chip system may include a chip, or may include a chip and another discrete device. A specific technology and a specific device form that are used by the radio access network device are not limited in embodiments of this application.

In this application, the terminal may be a device having a wireless transceiver function. The terminal may also be referred to as a terminal device, user equipment (user equipment, UE), a mobile station (mobile station, MS), a mobile terminal (mobile terminal, MT), or the like, and may be an entity, on a user side, configured to receive or transmit a signal, for example, a mobile phone. The terminal includes a handheld device, a vehicle-mounted device, a wearable device, or a computing device that has a wireless communication function. For example, the terminal may be a mobile phone (mobile phone), a tablet computer, or a computer having a wireless transceiver function. The terminal may alternatively be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self driving, telemedicine, the smart grid, smart furniture, a smart office, a smart wearable, smart transportation, and the smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like.

The terminal may be deployed on the land, including an indoor device, an outdoor device, a handheld device, a wearable device, or a vehicle-mounted device; may be deployed on the water, for example, on a ship; or may be deployed in the air, for example, on an airplane, a balloon, or a satellite.

In embodiments of this application, an apparatus configured to implement a function of the terminal may be a terminal, or may be an apparatus that can support the terminal in implementing the function, for example, a chip system, a communication module, or a modem. The apparatus may be installed in the terminal. The chip system may include a chip, or may include a chip and another discrete device. A specific technology and a specific device form that are used by the terminal are not limited in this application.

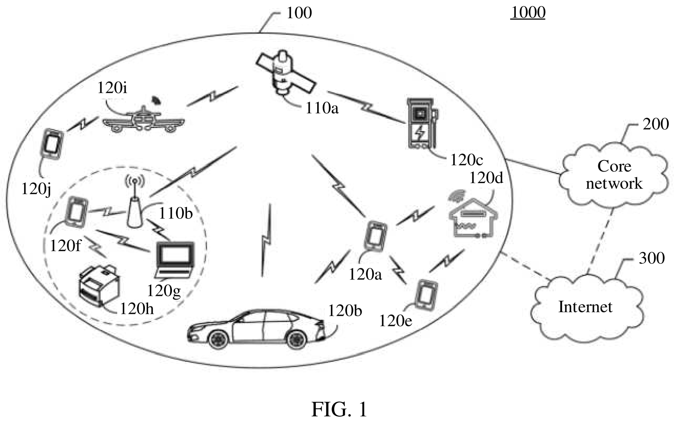

FIG. 1 is a diagram of an architecture of a communication system 1000 applicable to a method according to an embodiment of this application. As shown in FIG. 1, the communication system 1000 includes a radio access network 100 and a core network 200. Optionally, the communication system 1000 may further include an internet 300. The radio access network 100 may include at least one base station (for example, 110a and 110b in FIG. 1), and may further include at least one terminal (for example, 120a to 120j in FIG. 1).

The base station may be a base station deployed in the air, for example, may be a satellite base station 110a; or may be a base station deployed indoors, for example, may be a micro base station or an indoor base station 110b.

The terminal may be a terminal deployed in the air, for example, a helicopter or uncrewed aerial vehicle 120i in FIG. 1; or may be a terminal deployed on the ground, for example, a mobile phone 120a, a mobile phone 120e, a mobile phone 120f, a mobile phone 120j, a vehicle 120b, a computer 120g, or a printer 120h in FIG. 1.

The base station and the terminal may be fixed or movable. For example, the base station and the terminal may be deployed on the land, including an indoor device, an outdoor device, a handheld device, or a vehicle-mounted device; may be deployed on the water; or may be deployed on an airplane, a balloon, and an artificial satellite in the air.

Roles of the base station and the terminal may be relative. For example, the helicopter or uncrewed aerial vehicle 120i in FIG. 1 may be configured as a mobile base station. For 120j accessing the radio access network 100 via 120i, 120i is a base station. However, for 110a, 120i is a terminal. In other words, 110a and 120i communicate with each other based on a wireless air interface protocol. Certainly, 110a and 120i may alternatively communicate with each other based on an interface protocol between base stations. In this case, for 110a, 120i is also a base station. Therefore, both the base station and the terminal may be collectively referred to as communication devices, and 110a, 110b, and 120a to 120j in FIG. 1 may be referred to as communication devices that have respective corresponding functions, for example, communication devices having a base station function or communication devices having a terminal function.

Communication between a base station and a terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

It should be understood that, FIG. 1 is merely a diagram. The communication system may further include other devices, for example, may further include a wireless relay device and a wireless backhaul device, which are not shown in FIG. 1.

In actual application, to establish a connection to a network, a terminal usually needs to initiate random access to a radio access network device. For example, the terminal measures SSBs sent by the radio access network device, and selects an RO associated with an SSB with high signal strength, to send a preamble associated with the SSB.

The SSB may also be referred to as a synchronization signal and physical broadcast channel block (synchronization signal and physical broadcast channel block), which is configured by using a parameter "SSB-positions (ssb-PositionsInBurst)". The parameter "ssb-PositionsInBurst" may be a bitmap (bitmap) indicating which SSBs are for actual transmission in an SSB pattern. The SSB pattern includes bits respectively corresponding to a maximum quantity of transmittable SSBs (which may be understood as a maximum quantity of candidate SSBs). A specific value of the bit, for example, 1, indicates actual transmission of the SSB. Each bit in the SSB pattern may correspond to an index of one SSB. For example, when "ssb-PositionsInBurst" includes eight bits, it may indicate that the maximum quantity of SSBs is 8, and indexes of SSBs respectively corresponding to the eight bits are 0 to 7. For another example, when "ssb-PositionsInBurst" includes 64 bits, it may indicate that the maximum quantity of SSBs is 64, and indexes of SSBs respectively corresponding to the 64 bits are 0 to 63. The SSB index may alternatively be carried in the SSB. In this application, $N_{Tx}^{SSB}$ may be determined by using the foregoing bitmap.

In this application, the RO may be understood as a time-frequency resource that is configured by the radio access network device and that can be used for random access by the terminal, and may be specifically configured by using a parameter "PRACH configuration index". In time domain, a configuration period may be 10 milliseconds (ms), 20 ms, 40 ms, 80 ms, or 160 ms. The parameter "PRACH configuration index" may be for configuring which slots (slot) have ROs in one configuration period, how many PRACH slots are included in one slot, how many ROs are included in one PRACH slot, and the like. In frequency domain, the radio access network device may configure a quantity of ROs by using a parameter "msg1-FDM", for example, configure 1, 2, 4, or 8 ROs. ROs are classified into valid (valid) ROs and invalid ROs. All ROs in this application may be understood as valid ROs.

An SSB is associated with an RO. The following describes an association relationship between the SSB and the RO in detail with reference to the accompanying drawings.

The radio access network device may configure, by using a parameter "ssb-perRACH-Occasion", a quantity (denoted as N) of SSB indexes associated with one RO, which may be, for example, 1/8, 1/4, 1/2, 1, 2, 4, 8, or 16. In other words, the quantity of SSB indexes associated with one RO may be greater than or equal to 1, or may be less than 1. For example, when N=1/4, one RO is associated with 0.25 SSB indexes, that is, four ROs are associated with one SSB index, or it is understood that one SSB index is associated with four ROs.

In this application, a sequence of associating ROs with SSB indexes complies with the following conditions.

1. In one RO, preamble indexes are in ascending order.
2. In frequency domain, association is performed in ascending order of indexes.
3. In one PRACH slot, association is performed according to a time sequence.
4. PRACH slot indexes are in ascending order. In other words, association is first performed in an RO based on preambles, then association is performed in frequency domain, and then association is performed in time domain. For more details, refer to related explanations of the known technology. Details are not described herein again.

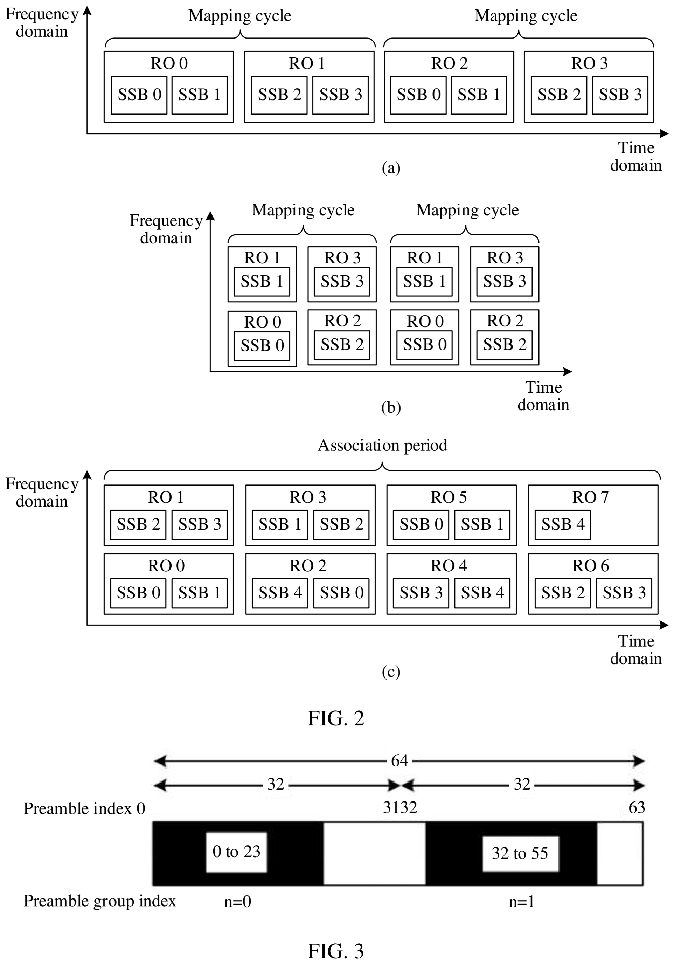

With reference to FIG. 2, the following describes in detail the association relationship between the SSB index and the RO by using an example.

FIG. 2 is a diagram of an association relationship between an SSB index and an RO according to an embodiment of this application.

As shown in (a) of FIG. 2, two mapping cycles (mapping cycles) are shown as an example. A value of the parameter "ssb-perRACH-Occasion" is 2, that is, one RO is associated with two SSB indexes. A value of the parameter "msg1-FDM" is 1, that is, one RO is configured in frequency domain. $N_{Tx}^{SSB} = 4$, that is, a quantity of SSBs sent by the radio access network device in half a radio frame is 4. It can be learned that, in time domain, an RO is associated with SSB indexes in ascending order of the indexes.

As shown in (b) of FIG. 2, two mapping cycles are shown as an example. A value of the parameter "ssb-perRACH-Occasion" is 1, that is, one RO is associated with one SSB index. A value of the parameter "msg1-FDM" is 2, that is, two ROs are configured in frequency domain. $N_{Tx}^{SSB} = 4$. It can be learned that, SSB indexes are first associated in ascending order in frequency domain, and then SSB indexes are associated in ascending order in time domain.

As shown in (c) of FIG. 2, one association period (association period) is shown as an example. A value of the parameter "ssb-perRACH-Occasion" is 2, that is, one RO is associated with two SSB indexes. A value of the parameter "msg1-FDM" is 2, that is, two ROs are configured in frequency domain. $N_{Tx}^{SSB} = 5$. It can be learned that, SSB indexes are first associated in ascending order in frequency domain, and then SSB indexes are associated in ascending order in time domain.

The mapping cycle and the association period are involved in several examples in FIG. 2. The mapping cycle means that indexes of SSBs (for example, SSBs sent in half a radio frame) sent by the radio access network device are associated once. As shown in (a) and (b) of FIG. 2, SSB indexes are 0 to 3, and associating an SSB 0 to an SSB 3 once is referred to as one mapping cycle.

It may be understood that, the SSB index may alternatively be another value, for example, an SSB index 5, an SSB index 7, an SSB index 8, or an SSB index 10. A specific SSB index depends on a configuration of a bitmap.

The association period is an integer multiple of a PRACH configuration period. When the PRACH configuration period is equal to 10 ms, the association period may be 10 ms, 20 ms, 40 ms, 80 ms, or 160 ms. A specific value of the association period depends on whether the indexes of the SSBs sent by the radio access network device are associated at least once, and is a smallest value of the foregoing values.

For example, as shown in (c) of FIG. 2, it is assumed that a 1st PRACH configuration period includes an RO 0 and an RO 1, and indexes of all SSBs (for example, an SSB 0 to an SSB 4) cannot be associated once in the 1st PRACH configuration period. Therefore, a 2nd PRACH configuration period is needed. It is assumed that the 2nd PRACH configuration period includes an RO 2 to an RO 7. In this case, all the SSB indexes can be associated at least once in the two PRACH configuration periods, and the two PRACH configuration periods are one association period (namely, two configuration periods, 20 ms). In the association period, after the SSB indexes are associated once, some ROs (for example, the RO 3 to the RO 7, and in addition, a position of one SSB remains in the RO 2) remain. In the remaining ROs, the SSB indexes may be further associated twice. In this case, the SSB indexes are associated thrice in total. Alternatively, it may be understood that the SSB indexes are associated for three rounds, and there are three mapping cycles. In this case, if ROs still remain, and the remaining ROs cannot be associated with all the SSB indexes once, the remaining ROs are not associated with the SSB indexes. For example, if the RO 7 is associated with only one SSB index, and a position of one SSB index remains, the RO 7 is not associated with an SSB index (in this case, a quantity of SSB indexes associated with the RO 7 is less than N).

The following describes in detail an association relationship between an SSB index and a preamble in one RO.

Quantities of contention based (contention based, CB) preambles corresponding to (or referred to as associated with) all SSB indexes are the same, and may be configured by the radio access network device by using a parameter "CB-PreamblesPerSSB". For example, in this application, the quantity of preambles associated with each SSB index is R.

When one RO is associated with only one SSB index, a start preamble index is 0, and preambles associated with the SSB index include a preamble 0 to a preamble R-1.

When one RO is associated with N SSB indexes, a start preamble index associated with a $j^{th}$ SSB index is $j \cdot N_{preamble}^{total} / N$, and preamble indexes associated with the $j^{th}$ SSB index are from $j \cdot N_{preamble}^{total} / N$ to $j \cdot N_{preamble}^{total} / N + R - 1$. $0 \le j \le N - 1$.

For example, in an RO 0 shown in (a) of FIG. 2, preambles associated with an SSB 0 are from $0 \cdot N_{preamble}^{total} / 2 = 0$ to R-1 (which may be considered that a preamble group index is 0, and a preamble group corresponding to the preamble group index includes a preamble 0 to a preamble R-1); and preambles associated with an SSB 1 are from $1 \cdot N_{preamble}^{total} / 2 = N_{preamble}^{total} / 2$ to $1 \cdot N_{preamble}^{total} / 2 + R - 1$ (which may be considered that a preamble group index is 1, and a preamble group corresponding to the preamble group index includes a preamble $1 \cdot N_{preamble}^{total} / 2 = N_{preamble}^{total} / 2$ to a preamble $1 \cdot N_{preamble}^{total} / 2 + R - 1$ ).

FIG. 3 is a diagram of a preamble associated with each SSB index in one RO according to an embodiment of this application.

As shown in FIG. 3, it is assumed that $N_{preamble}^{total} = 64$, a preamble group index n corresponding to a 1st SSB index in the RO is equal to 0, preambles associated with the 1st SSB index include a preamble 0 to a preamble 23, a preamble group index n corresponding to a 2nd SSB index is equal to 1, preambles associated with the 2nd SSB index include a preamble 32 to a preamble 55, and a quantity of preambles associated with each SSB index is 24.

In a random access process, to increase uplink coverage of a PRACH, PRACH repetition may be performed, and a quantity of repetitions may be 2, 4, or 8. For example, if the quantity of repetitions is 2 (representing that a quantity of ROs in one RO group is 2), two ROs (for example, an RO A and an RO B) associated with SSBs with a same index may be used as one group (which may be referred to as an RO group). In a four-step random access process, the terminal may send a preamble in the RO A and the RO B, and then receive a message 2 (Message 2). If the receiving fails, the failure is referred to as a RACH attempt (RACH attempt) failure, and then a RACH is continued.

Currently, SSB indexes associated with different ROs in a same RO group are fixed, so that the radio access network device can perform combined decoding based on a preamble received in different ROs.

For example, it is assumed that a quantity of SSBs sent by the radio access network device in half a radio frame is 6, specifically including an SSB 0 to an SSB 5, and a quantity of SSB indexes associated with one RO is 2. In this case, SSB indexes associated with an RO can only be {0, 1}, {2, 3}, or {4, 5}, and {SSB 1, SSB 2} or {SSB 3, SSB 4} cannot be associated with one RO. However, this may limit a quantity of SSBs sent by the radio access network device. For example, a quantity of SSBs in half a radio frame is required to be an integer multiple of a quantity of SSB indexes associated with one RO. Consequently, the quantity of SSBs in half the radio frame cannot be flexibly adjusted based on a requirement.

Therefore, to resolve the foregoing problem, this application provides a method. Assuming that a radio access network device configures a quantity of ROs in one RO group as K, the K ROs that are associated with a same SSB index and that include two ROs that are further associated with different SSB indexes are determined as one RO group. In other words, all the K ROs are associated with the same SSB index, and the K ROs include two ROs that are further associated with different SSB indexes. In this way, even if a quantity of SSBs (for example, SSBs sent in half a radio frame) sent by the radio access network device is not an integer multiple of a quantity of SSB indexes associated with one RO, the K ROs may also be determined. Therefore, a quantity limitation that the quantity of SSBs sent by the radio access network device is the integer multiple of the quantity of SSB indexes associated with one RO may be abandoned. The radio access network device can flexibly adjust the quantity of sent SSBs based on a requirement, and uplink coverage of a PRACH can also be increased.

The following describes in detail a communication method provided in embodiments of this application with reference to the accompanying drawings. It should be understood that, in the following embodiments, the method is described from a perspective of interaction between a terminal and a radio access network device, but this shall not constitute any limitation on an execution body of the method. The method provided in embodiments of this application can be performed provided that a program that records code of the method provided in embodiments of this application can be run. For example, the terminal may alternatively be replaced with a component (for example, a chip or a chip system) configured in the terminal, or another functional module that can invoke a program and execute the program; and the radio access network device may alternatively be replaced with a component (for example, a chip or a chip system) configured in the radio access network device, or another functional module that can invoke a program and execute the program. This is not limited in embodiments of this application.

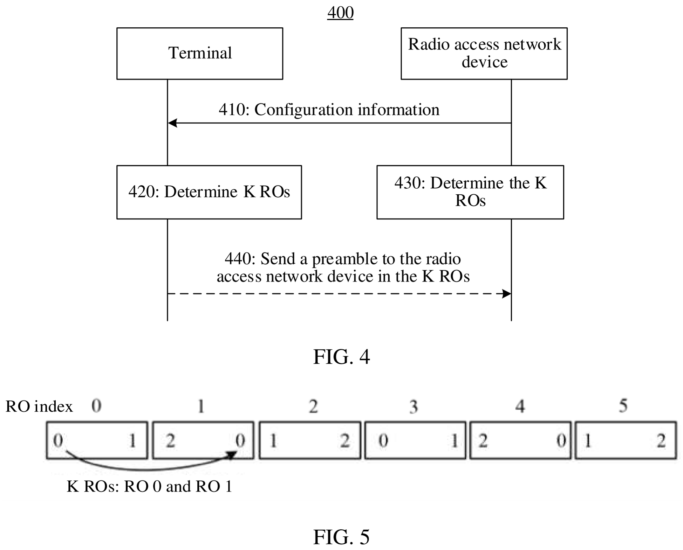

FIG. 4 is a schematic flowchart of a communication method 400 according to an embodiment of this application. The following describes in detail steps in the method 400.

In step 410, a radio access network device sends configuration information to a terminal. Correspondingly, the terminal receives the configuration information from the radio access network device.

The configuration information is for configuring a quantity K of ROs in one RO group, and K is an integer greater than 1. In other words, the configuration information is for configuring that one RO group includes K ROs.

For example, the radio access network device sends the configuration information to the terminal, where the configuration information is for configuring that one RO group includes K ROs. Correspondingly, the terminal device receives the configuration information.

It may be understood that, when the radio access network device configures a plurality of K values, the terminal may determine one RO group for each of the K values, or may determine an RO group for one of the K values, for example, may determine an RO group based on a largest K value. This is not limited in this application.

Optionally, the radio access network device may further configure, for the terminal, a quantity of SSB indexes associated with one RO (or referred to as a quantity of SSBs associated with one RO), a PRACH configuration index (PRACH configuration index), a quantity of ROs in frequency domain (configured by using a parameter msg1-FDM), a quantity of SSBs sent by the radio access network device (configured by using a parameter ssb-PositionsInBurst), and the like. This is not limited in this application.

In step 420, the terminal determines the K ROs based on the configuration information.

The K ROs may be considered as one RO group.

In a possible implementation, the terminal determines an RO group corresponding to each SSB index based on the following possible designs of the K ROs. Each SSB herein is each SSB sent by the radio access network device. In this case, a first SSB may be understood as any one of SSBs sent by the radio access network device. Then, after receiving a plurality of SSBs from the radio access network device, the terminal selects an SSB with high signal quality in the plurality of SSBs, and determines an RO group corresponding to the SSB.

In another possible implementation, after receiving a plurality of SSBs from the radio access network device, the terminal selects an SSB with high signal quality in the plurality of SSBs, and determines an RO group corresponding to the SSB based on the following possible designs of the K ROs. The SSB (for example, a first SSB) with high signal quality may be understood as an SSB whose reference signal received power (reference signal received power, RSRP) is greater than a configured threshold.

In this embodiment of this application, the K ROs have the following two possible designs:

Design 1: The K ROs are all associated with a same SSB index, the K ROs include at least two ROs, and the at least two ROs are further associated with different SSB indexes. In other words, the K ROs are all associated with the same SSB index, and include two ROs that are further associated with different SSB indexes.

Design 2: SSB indexes associated with all the K ROs are completely the same. That the SSB indexes associated with all the ROs are completely the same includes: Quantities of the SSB indexes associated with all the ROs are the same and values of the SSB indexes associated with all the ROs are completely the same.

The following separately describes in detail this embodiment of this application for the foregoing two possible designs.

First, for Design 1, the K ROs are described in detail.

The K ROs are all associated with the same SSB index, the K ROs include the at least two ROs, and the at least two ROs are further associated with different SSB indexes. The same SSB index is, for example, a first SSB index, and the first SSB index may be, for example, an SSB with best signal quality in the plurality of SSBs sent by the radio access network device.

For example, SSB indexes associated with an RO A include {x, y, m, n}, and SSB indexes associated with an RO B include {x, k, q, z}. In this case, for an SSB x, the RO A and the RO B are one RO group, that is, the RO A and the RO B are two ROs (K=2) corresponding to the SSB x (or referred to as an RO group corresponding to the SSB x). However, for another SSB, for example, an SSB k, the RO A and the RO B are not one RO group.

FIG. 5 is a diagram of an SSB index associated with an RO according to an embodiment of this application. In FIG.

5, SSBs sent by the radio access network device include an SSB 0, an SSB 1, and an SSB 2.

For example, as shown in FIG. 5, it is assumed that K=2, and it can be learned that, both an RO 0 and an RO 1 are associated with the SSB 0, the RO 0 is further associated with the SSB 1, and the RO 1 is further associated with the SSB 2. In this case, the RO 0 and the RO 1 may be used as one RO group, and the RO group may be an RO group corresponding to the SSB 0. In other words, K ROs include the RO 0 and the RO 1.

It may be understood that, in this design, the K ROs are all associated with a same SSB index, and include two ROs that are further associated with different SSB indexes. Whether SSB indexes further associated with other ROs in the K ROs are the same is not limited in this application.

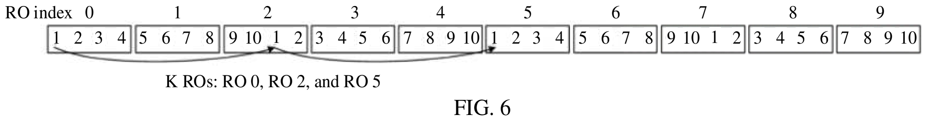

FIG. 6 is another diagram of an SSB index associated with an RO according to an embodiment of this application. In FIG. 6, SSBs sent by the radio access network device include an SSB 1 to an SSB 10.

As shown in FIG. 6, it is assumed that K=3, an RO 0, an RO 2, and an RO 5 are all associated with the SSB 1, the RO 0 is further associated with the SSB 2, the SSB 3, and the SSB 4, and the RO 2 is further associated with the SSB 9, the SSB 10, and the SSB 2. In this case, the RO 0, the RO 2, and the RO 5 may be used as one RO group, and the RO group may be an RO group corresponding to the SSB 1. In other words, K ROs include the RO 0, the RO 2, and the RO 5. Therefore, for the SSB 1, the RO 0, the RO 2, and the RO 5 are all associated with the SSB 1, and the RO 0 and the RO 2 are further associated with different SSB indexes (for example, the RO 0 is further associated with the SSB 3 and the SSB 4, and the RO 2 is further associated with the SSB 9 and the SSB 10). Whether an index further associated with the RO 5 is the same as the SSB index further associated with the RO 0 or the RO 2 is not limited (in FIG. 6, an example in which the index further associated with the RO 5 is the same as the SSB index further associated with the RO 0 is used).

It should be understood that, in FIG. 6, a same SSB index may be the SSB 1, or may be the SSB 2. In other words, the RO 0, the RO 2, and the RO 5 may be considered as an RO group corresponding to the SSB 1, or may be an RO group corresponding to the SSB 2.

In the following embodiments, a preamble associated with an SSB index is described in detail. An example in which a same SSB index is a first SSB index is used.

It is not difficult to understand that, when a quantity of indexes of the plurality of SSBs sent by the radio access network device is not an integer multiple of a configured quantity of SSB indexes associated with one RO and the configured quantity is configured by the radio access network device, because a position of the first SSB index in a first RO may be different from a position of the first SSB index in a second RO, a preamble associated with the first SSB index in the first RO is different from a preamble associated with the first SSB index in the second RO. A position of an SSB index in an RO may be understood as a sorted position of the SSB index in a plurality of SSB indexes when the RO is associated with the plurality of SSB indexes. In other words, the SSB index is a specific SSB index in the plurality of SSB indexes, and the specific SSB index may be numbered from 1, or may be numbered from 0. This is not limited in this application.

For example, as shown in FIG. 5, a position of the SSB 0 in the RO 0 is a $1^{st}$ SSB index, and a position of the SSB 0 in the RO 1 is a $2^{nd}$ SSB index. It can be learned from the foregoing association relationship between an SSB index and a preamble that, a preamble associated with the SSB 0 in the RO 0 is different from a preamble associated with the SSB 0 in the RO 1. In this case, the radio access network device cannot perform combined receiving on the preamble associated with the SSB in the RO 0 and the preamble associated with the SSB in the RO 1. Therefore, to resolve the problem that the radio access network device cannot perform combined receiving, this application provides the following two possible solutions.

Solution 1: A preamble associated with a first SSB index in a first RO is different from a preamble associated with the first SSB index in a second RO, and the preamble associated with the first SSB index in the first RO is in one-to-one correspondence with the preamble associated with the first SSB index in the second RO. In other words, although the preamble associated with the first SSB index in the first RO is different from the preamble associated with the first SSB index in the second RO, a correspondence exists between the preamble associated with the first SSB index in the first RO and the preamble associated with the first SSB index in the second RO, so that the radio access network device may determine the preamble associated with the first SSB index in the second RO based on the preamble associated with the first SSB index in the first RO.

The first RO and the second RO are two ROs in the K ROs, that is, the K ROs include two ROs meeting the foregoing relationship.

By way of example rather than limitation, when a preamble associated with the first SSB index in the first RO is an $i^{th}$ preamble, an index of the preamble associated with the first SSB index in the second RO is $N_{preamble}^{total}/N+i$, where i is an integer greater than or equal to 0, $N_{preamble}^{total}$ represents a total quantity of preambles, and N represents a configured quantity of SSB indexes associated with one RO, where the configured quantity is configured by the radio access network device. The $i^{th}$ preamble is an $i^{th}$ preamble in R preambles associated with the first SSB index in the first RO, R is a quantity of preambles associated with the first SSB index in the first RO, and $0 \le i \le R-1$. In other words, indexes of the preambles associated with the first SSB index in the first RO are from 0 to R-1, indexes of the preambles associated with the first SSB index in the second RO are from $N_{preamble}^{total}/N$ to $N_{preamble}^{total}/N+R-1$, and the preamble 0 to the preamble R-1 are in one-to-one correspondence with the preamble $N_{preamble}^{total}/N$ to the preamble $N_{preamble}^{total}/N+R-1$.

For example, as shown in FIG. 5, it is assumed that a quantity of preambles associated with each SSB is 32, a total quantity of preambles is 64, indexes of preambles associated with the SSB 0 in the RO 0 are 0 to 31, indexes of preambles associated with the SSB 1 in the RO 0 are 32 to 64, and the SSB 0 has the best signal quality. In this case, if an index of a preamble that the terminal selects to send in the RO 0 is 0, an index of a preamble sent by the terminal in the RO 1 is 64/2+0=32 .

It may be understood that, another function mapping relationship may alternatively exist between the preamble associated with the first SSB index in the first RO and the preamble associated with the first SSB index in the second RO. This is not limited in this application.

Solution 2: A preamble associated with a first SSB index in a third RO is the same as a preamble associated with a first SSB index in a fourth RO, and the third RO and the fourth RO are any two ROs in the K ROs. In other words, when the quantity of indexes of the plurality of SSBs sent by the radio access network device is not the integer multiple of a configured quantity of SSB indexes associated with one RO and the configured quantity is configured by the radio access network device, even if a position of the first SSB index in a first RO is different from a position of the first SSB index in a second RO, the preamble associated with the first SSB index in the third RO is the same as the preamble associated with the first SSB index in the fourth RO, so that the radio access network device performs combined decoding on the preamble associated with the first SSB index in the third RO and the preamble associated with the first SSB index in the fourth RO.

The third RO and the fourth RO are any two ROs in the K ROs, that is, any two ROs in the K ROs need to meet the foregoing relationship.

How to make the preamble associated with the first SSB index in the third RO the same as the preamble associated with the first SSB index in the fourth RO includes the following three possible designs.

In a first possible design, the indexes of the plurality of SSBs sent by the radio access network device are in one-to-one correspondence with a plurality of preamble groups, the preamble associated with the first SSB index in the third RO belongs to a first preamble group, the preamble associated with the first SSB index in the fourth RO belongs to the first preamble group, and the first preamble group is a preamble group corresponding to the first SSB index in the plurality of preamble groups.

The indexes of the plurality of SSBs sent by the radio access network device are a plurality of indexes (namely, SSB indexes) corresponding to the plurality of SSBs sent by the radio access network device. Each index corresponds to one SSB, and the SSB corresponding to each index is sent by the radio access network device. For example, eight SSBs correspond to SSB indexes 0 to 7. The radio access network device sends four SSBs. Indexes of the four SSBs may be an SSB 0, an SSB 3, an SSB 4, and an SSB 6, or may be other SSB indexes. This is not limited in this application.

A quantity of preamble groups is the same as a quantity of indexes of the plurality of SSBs sent by the radio access network device, each SSB index corresponds to one preamble group, and both the preamble associated with the first SSB index in the third RO and the preamble associated with the first SSB index in the fourth RO belong to the preamble group corresponding to the first SSB index.

For example, all preambles are divided into $N_{Tx}^{SSB}$ parts, and each SSB index corresponds to one preamble group. If $N_{preamble}^{total}/N_{Tx}^{SSB}$ is not an integer, rounding down may be performed. For example, as shown in FIG. 5, indexes of the SSBs sent by the radio access network device include an SSB 0 to an SSB 2, that is, $N_{Tx}^{SSB}=3$. All preambles are divided into three parts. For example, if indexes n of preamble groups are equal to 0, 1, and 2, an index of a preamble group corresponding to the SSB 0 is 0, an index of a preamble group corresponding to the SSB 1 is 1, and an index of a preamble group corresponding to the SSB 2 is 2.

In a second possible design, a preamble associated with a same SSB index in the K ROs is determined based on a preamble associated with the same SSB index in a 1st RO, and the 1st RO is an RO at an earliest time domain position in the K ROs. The RO at the earliest time domain position in the K ROs may be understood as a 1st RO for repetition in the K ROs, or an RO that occupies an earliest time domain symbol in the K ROs.

In an example, a preamble associated with the first SSB index in the K ROs is the same as a preamble associated with the first SSB index in the 1st RO.

It may be understood that, that the preamble associated with the first SSB index in the K ROs is the same as the preamble associated with the first SSB index in the 1st RO is merely an example, and shall not constitute any limitation on this application. For example, the preamble associated with the first SSB index in the K ROs is the same as a preamble associated with the first SSB index in a last RO. In other words, the preamble associated with the first SSB index in the K ROs is determined based on the preamble associated with the first SSB index in the last RO. In other words, the terminal and the radio access network device only need to agree on that determining is performed based on an associated preamble in which RO.

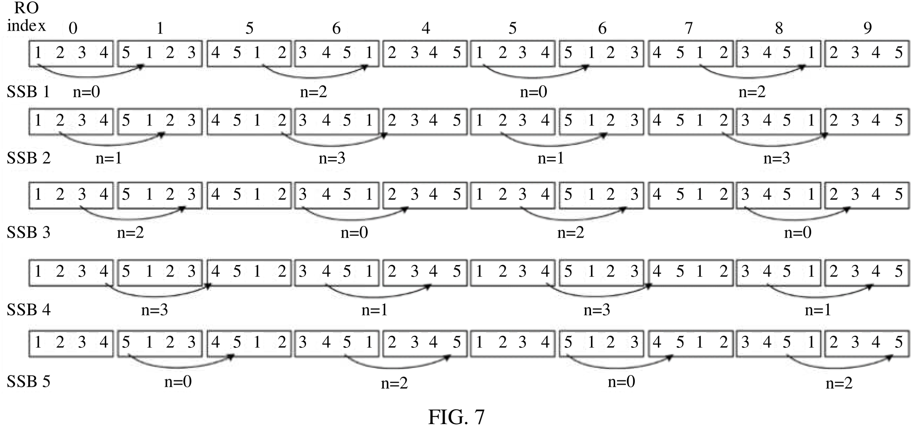

FIG. 7 is a diagram of preambles associated with different SSBs according to an embodiment of this application.

As shown in FIG. 7, a preamble associated with an SSB 1 in an RO 1 is the same as a preamble associated with the SSB 1 in an RO 0, and both indexes n of preamble groups corresponding to the SSB 1 are equal to 0 (for a correspondence between an index of a preamble group and an index of a preamble, refer to the foregoing descriptions). A preamble associated with the SSB 1 in an RO 3 is the same as a preamble associated with the SSB 1 in an RO 2, and both indexes n of preamble groups corresponding to the SSB 1 are equal to 2. A preamble associated with an SSB 2 in the RO 1 is the same as a preamble associated with the SSB 2 in the RO 0, and both indexes n of preamble groups corresponding to the SSB 2 are equal to 1. A preamble associated with the SSB 2 in an RO 4 is the same as a preamble associated with the SSB 2 in the RO 3, and both indexes n of preamble groups corresponding to the SSB 2 are equal to 3. Details are not listed herein.

In the second possible design, the K ROs belong to a first RO group, a second RO group corresponding to a second SSB index in the indexes of the plurality of SSBs sent by the radio access network device is invalid, and the second RO group meets the following condition: A preamble associated with the second SSB index in the second RO group is the same as a preamble associated with the first SSB index in the first RO group, and the second RO group and the first RO group include at least one same RO. In this way, the radio access network device can distinguish which SSB corresponding to a received preamble. That the second RO group is invalid may be understood as that no repeated preamble is sent in an RO in the second RO group, or the second RO group cannot be used for repetition. It may be understood that, if the terminal intends to determine whether an RO group corresponding to an SSB index is invalid, the terminal needs to determine an RO group corresponding to each SSB index, and determine whether a second SSB index in a plurality of SSB indexes is invalid.

For example, as shown in FIG. 7, an RO group corresponding to an SSB 5 includes the RO 1 and the RO 2, and an RO group corresponding to the SSB 1 includes the RO 0 and the RO 1. If n=0 is used for preambles associated with the SSB 5 in the RO group, and n=0 overlaps with n=0 of the SSB 1 in the RO 1, the RO group corresponding to the SSB 5 is invalid, or the RO group corresponding to the SSB 1 is invalid.

Optionally, the terminal may further continue to determine whether another preamble may be used, and if no other preamble can be used, determine that the second RO group is invalid.

For example, as shown in FIG. 7, when n=0, it overlaps with n=0 of the SSB 1 in the RO 1; when n=1, it overlaps with n=1 of the SSB 2 in the RO 1; when n=2, it overlaps with n=3 of the SSB 3 in the RO 1; and when n=3, it overlaps with n=3 of an SSB 4 in the RO 2. Therefore, the RO group corresponding to the SSB 5 is invalid.

It may be understood that, that the preamble associated with the same SSB index in the K ROs is determined based on the preamble associated with the same SSB index in the 1st RO may further include: A correspondence exists between the preamble associated with the first SSB index in the K ROs and the preamble associated with the first SSB index in the 1st RO.

For example, a correspondence exists between the preamble associated with the first SSB index in the K ROs and the preamble associated with the first SSB index in the 1st RO. For example, if the preamble associated with the first SSB index in the 1st RO belongs to a preamble group with n=0, a preamble associated with the first SSB index in another RO belongs to a preamble group with n=1.

In a third possible design, a preamble group corresponding to each SSB index associated with a fifth RO is related to the SSB index, a larger SSB index indicates a larger index of a preamble group corresponding to the SSB index, an index of each preamble group indicates an index of a 1st preamble in the preamble group, and the fifth RO is any one of the K ROs.

In other words, an index of a preamble group is determined based on an SSB index, and a larger SSB index indicates a larger index of a preamble group corresponding to the SSB index. By way of example rather than limitation, if SSB indexes associated with the fifth RO include 0 to 2, an index of a preamble group corresponding to an SSB 0 is 0, an index of a preamble group corresponding to an SSB 1 is 1, and an index of a preamble group corresponding to an SSB 2 is 2. If SSB indexes associated with the fifth RO include 0, 1, and 3, an index of a preamble group corresponding to an SSB 0 is 0, an index of a preamble group corresponding to an SSB 1 is 1, and an index of a preamble group corresponding to an SSB 3 is 2.

It may be understood that, when the K ROs are determined, the foregoing condition that the K ROs should meet needs to be met, and indexes of preamble groups corresponding to the same SSB index also need to be the same. Therefore, the terminal may determine an index of a preamble group corresponding to each SSB index based on a rule that a larger SSB index indicates a larger index of a preamble group corresponding to the SSB index, and determine the K ROs.

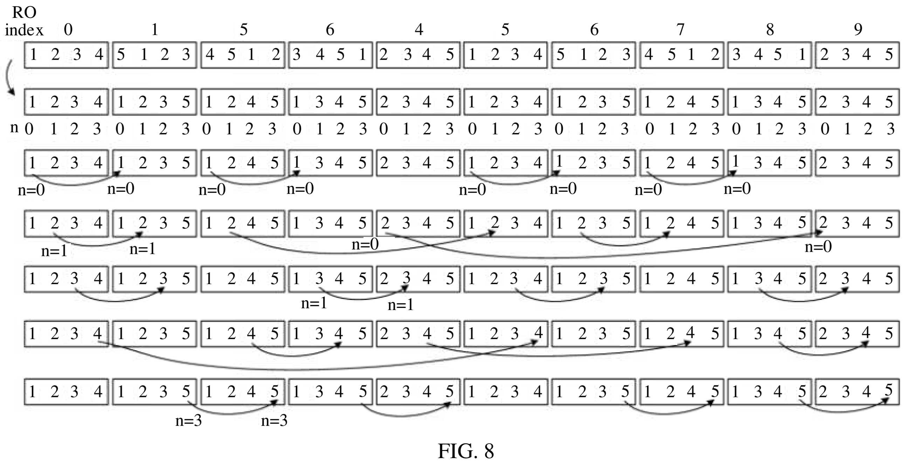

FIG. 8 is another diagram of preambles associated with different SSBs according to an embodiment of this application.

As shown in FIG. 8, in each RO, SSB indexes are sorted in ascending order. When K ROs are determined, it needs to be considered that the K ROs are all associated with a same SSB index, the K ROs include at least two ROs, and the at least two ROs are further associated with different SSB indexes; and preamble groups corresponding to a same SSB index need to be further the same.

For example, an SSB 2 is used as an example, an RO 0 and an RO 1 are one group, and preamble groups corresponding to the SSB 2 in the RO 0 and the RO 1 are the same, that is, n=1; and an RO 4 and an RO 9 are one group, and preamble groups corresponding to the SSB 2 in the RO 4 and the RO 9 are the same, that is, n=0. Details are not listed herein.

Optionally, the K ROs include at least two ROs, and the at least two ROs are further associated with different quantities of SSB indexes.

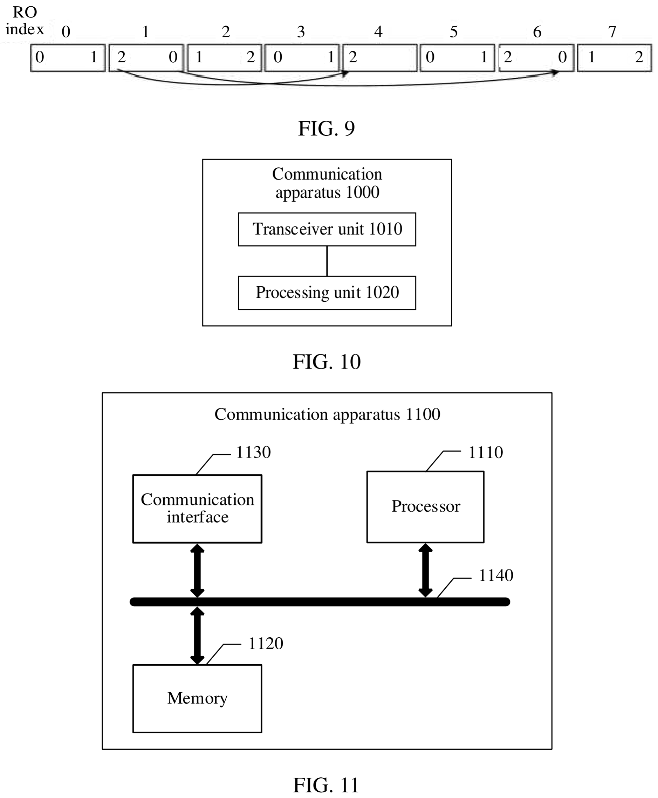

The K ROs may include two ROs that are further associated with different quantities of SSB indexes. For example, the K ROs include an RO 1 and an RO 2, SSB indexes associated with the RO 1 include 1, 2, 3, and 4, and SSB indexes associated with the RO 2 include 4, 5, and 6. In this case, in addition to being associated with a same SSB index (for example, 4) by the RO 1 and the RO 2, the RO 1 is further associated with three SSB indexes (for example, 1, 2, and 3), and the RO 2 is further associated with two SSB indexes (for example, 5 and 6). It may be understood that, the RO 1 is further associated with some SSB indexes, but the SSB indexes are not associated with the RO 2. Similarly, the RO 2 is further associated with some SSB indexes, but the SSB indexes are not associated with the RO 1. For another example, the K ROs include an RO 1 and an RO 2, SSB indexes associated with the RO 1 include 4, 5, 0, and 1, and SSB indexes associated with the RO 2 include 4 and 5. In this case, except that the RO 1 and the RO 2 are associated with same SSB indexes (for example, 4 and 5), the RO 1 is further associated with two SSB indexes (for example, 0 and 1). In this case, only the RO 1 is further associated with some SSB indexes, but the SSB indexes are not associated with the RO 2. FIG. 9 is a diagram in which two ROs are associated with different quantities of SSB indexes according to an embodiment of this application.

As shown in FIG. 9, an RO 1 and an RO 4 may be one RO group, SSB indexes associated with the RO 1 include 2 and 0, an SSB index associated with the RO 4 includes 2, and a position of an SSB 2 in the RO 1 is the same as a position of the SSB 2 in the RO 4. It can be learned that, except that the RO 1 and the RO 2 are associated with a same SSB index (for example, 2), the RO 1 is further associated with one SSB index (for example, 0), and the RO 2 is not associated with the SSB 0.

It may be understood that, in some cases, a quantity of indexes of the plurality of SSBs sent by the radio access network device is not an integer multiple of a configured quantity of SSB indexes associated with one RO, where the configured quantity is configured by the radio access network device, but a quantity of SSB indexes associated with an RO may be less than the configured quantity.

In Design 1, when the K ROs are determined, the K ROs that are all associated with the same SSB index are selected, and the K ROs include the at least two ROs that are further associated with different SSB indexes. In other words, the K ROs are all associated with the same SSB index, and include two ROs that are further associated with different SSB indexes. Whether SSB indexes further associated with other ROs in the K ROs are the same is not limited in this application. In this way, regardless of whether a quantity of indexes of SSBs (for example, SSBs sent in half a radio frame) sent by the radio access network device is an integer multiple of a quantity that is of SSB indexes associated with one RO and the configured quantity is configured by the radio access network device, the K ROs may be determined. Correspondingly, the radio access network device can flexibly adjust the quantity of sent SSBs based on a requirement.

The following describes Design 2 in detail.

When the K ROs are determined, ROs associated with completely a same SSB index are selected. In other words, the K ROs are all associated with completely the same SSB index (including that quantities of associated SSB indexes are the same and the associated SSB indexes are completely the same). It may also be understood that, an SSB index associated with each of the K ROs corresponds to a same index of a preamble group. In other words, for a same SSB index, indexes of preamble groups corresponding to the same SSB index in all of the K ROs are the same. For example, as shown in FIG. 9, an RO 1 and an RO 6 may be one RO group, SSB indexes associated with the RO 1 include 2 and 0, SSB indexes associated with the RO 6 include 2 and 0, and a position of the SSB 0 in the RO 1 is the same as a position of the SSB 0 in the RO 6.

In a possible implementation, a quantity of SSB indexes associated with each of the K ROs is equal to a configured quantity of SSB indexes associated with one RO and the configured quantity is configured by the radio access network device. In other words, when the K ROs are determined, an RO whose quantity of associated SSB indexes is equal to a configured quantity of SSB indexes associated with one RO is selected, where the configured quantity is configured by the radio access network device, and SSB indexes associated with all the K ROs are completely the same.

For example, as shown in FIG. 5, an RO 0 and an RO 3 may be one RO group, and SSB indexes associated with each of the RO 0 and the RO 3 are 0 and 1. An RO 1 and an RO 4 may be one RO group, and SSB indexes associated with each of the RO 1 and the RO 4 are 2 and 0.

For an RO whose quantity of associated SSB indexes is less than a configured quantity of SSB indexes associated with one RO, where the configured quantity is configured by the radio access network device, the following two possible designs are provided.

In one possible design, when a quantity of SSB indexes associated with a sixth RO is less than a configured quantity of SSB indexes associated with one RO and the configured quantity is configured by the radio access network device, the sixth RO does not belong to the K ROs. In other words, the RO whose quantity of associated SSB indexes is less than a configured quantity of SSB indexes associated with one RO where the configured quantity is configured by the radio access network device does not belong to the K ROs, or the RO whose quantity of associated SSB indexes is less than a configured quantity of SSB indexes associated with one RO where the configured quantity is configured by the radio access network device does not form any RO group. It may also be understood that, the RO does not support PRACH repetition.

In the other possible design, a quantity of SSB indexes associated with each of the K ROs is less than a configured quantity of SSB indexes associated with one RO, where the configured quantity is configured by the radio access network device, and quantities of SSB indexes associated with all the K ROs are the same. In other words, for an RO whose quantity of associated SSB indexes is less than a configured quantity of SSB indexes associated with one RO, where the configured quantity is configured by the radio access network device, an RO that is associated with a same quantity of SSB indexes and completely same associated SSB indexes as the RO needs to be found to form the K ROs, or to form an RO group.

For example, as shown in FIG. 9, the RO 4 and a next RO associated with only an SSB 2 may be one RO group.

In Design 2, when the K ROs are determined, the ROs associated with completely the same SSB index are selected. In other words, the K ROs are all associated with completely the same SSB index (including that quantities of associated SSB indexes are the same and the associated SSB indexes are the same). In this way, a method for determining the K ROs is provided. In this way, regardless of whether a quantity of indexes of SSBs (for example, SSBs sent in half a radio frame) sent by the radio access network device is an integer multiple of a configured quantity of SSB indexes associated with one RO, where the configured quantity is configured by the radio access network device, the K ROs may be determined. Correspondingly, the radio access network device can flexibly adjust the quantity of sent SSBs based on a requirement.

It may be understood that, between Design 1 and Design 2, a protocol may support only one design by default, or the protocol may support the two designs. A specific design is configured by the radio access network device, or may be configured by using higher layer signaling, for example, a system message or radio resource control (radio resource control, RRC).

In some possible implementations, the radio access network device may also limit a quantity of sent SSBs to be an integer multiple of a configured quantity of SSB indexes associated with one RO. Alternatively, when a quantity of SSBs sent by the radio access network device is not an integer multiple of a configured quantity of SSB indexes associated with one RO, the SSB indexes associated with the K ROs are indexes of some SSBs in the plurality of SSBs sent by the radio access network device, and a quantity of SSBs in the some SSBs is a maximum integer multiple of a configured quantity of SSB indexes associated with one RO, where the configured quantity is configured by the radio access network device. For example, if the quantity of indexes of the SSBs sent by the radio access network device is 10, and a configured quantity of SSB indexes associated with one RO, where the configured quantity is configured by the radio access network device is 4, eight SSBs are repeated, that is, only eight SSBs support PRACH repetition.

In step 430, the radio access network device determines the K ROs.

The K ROs may be considered as one RO group. It may be understood that, the terminal may determine an SSB (for example, a first SSB) with high signal quality in the received SSBs, and after determining a first RO group corresponding to the first SSB, send a preamble corresponding to the first SSB in K ROs in the first RO group corresponding to the first SSB. Correspondingly, the radio access network device may determine the K ROs (or determine the RO group), to perform combined detection on signals received in different ROs belonging to the same RO group, to receive the preamble.

For example, the radio access network device may determine which ROs belong to a same RO group. For example, as shown in FIG. 5, according to Design 1, if the radio access network device determines that the RO 0 and the RO 1 belong to a same RO group, the radio access network device performs combined detection on signals at a same position in the RO 0 and the RO 1. Similarly, the radio access network device may further successively determine that the RO 0 and the RO 2 belong to a same RO group, the RO 1 and the RO 2 belong to a same RO group, the RO 3 and the RO 4 belong to a same RO group, the RO 3 and the RO 5 belong to a same RO group, the RO 4 and the RO 5 belong to a same RO group, and the like.

It may be understood that, a same design is used when the radio access network device and the terminal determine the K ROs. For example, the K ROs determined by the radio access network device and the terminal meet the following condition: The K ROs are all associated with a same SSB index, the K ROs include at least two ROs, and the at least two ROs are further associated with different SSB indexes. For another example, the K ROs determined by the radio access network device and the terminal meet the following condition: SSB indexes associated with all the K ROs are completely the same. For still another example, the K ROs determined by the radio access network device and the terminal meet the following condition: The K ROs are all associated with a same SSB index, the K ROs include at least two ROs, the at least two ROs are further associated with different SSB indexes, and positions of a same SSB index in different ROs are the same (that is, n is the same).

If both the radio access network device and the terminal support the foregoing plurality of possible designs, the radio access network device may indicate, to the terminal, a design to be used to determine the K ROs.

A process in which the radio access network device determines the K ROs is the same as that of the terminal. For more detailed explanations, refer to the descriptions in step 420. Details are not described herein again.

Optionally, the method 400 may further include step 440: The terminal sends a preamble to the radio access network device in the K ROs. Correspondingly, the radio access network device receives the preamble in the K ROs (which may be understood as that the radio access network device performs detection in each of the K ROs, until the preamble is received). The radio access network device (for example, a base station) may perform combined detection, may perform separate detection, or may perform partial combined detection and partial separate detection. This is not limited in this application.

For example, the terminal may send a preamble corresponding to a first SSB in at least two ROs in a first RO group (where the first RO group includes the K ROs) corresponding to the first SSB. The first SSB may be the SSB with high signal quality that is determined by the terminal device based on measurement on the plurality of SSBs sent by the radio access network device. Correspondingly, the radio access network device performs detection in the ROs in the first RO group, until the preamble corresponding to the first SSB is received.

For another example, the terminal may send a preamble corresponding to a first SSB in at least one RO in a first RO group (where the first RO group includes the K ROs) corresponding to the first SSB. The first SSB may be the SSB with high signal quality that is determined by the terminal device based on measurement on the plurality of SSBs sent by the radio access network device. Correspondingly, the radio access network device performs detection in the RO in the first RO group, until the preamble corresponding to the first SSB is received.

The radio access network device may perform combined detection on signals at a same position in K ROs that belong to a same RO group, until a preamble is received. For example, as shown in FIG. 5, the RO group corresponding to the SSB 0 includes the RO 0 and the RO 1, and the radio access network device performs combined detection on signals in the RO 0 and the RO 1.

Table 1 and Table 2 show effect comparisons between Design 1 and Design 2 provided in this embodiment of this application. In Table 1 and Table 2, a scenario shown in FIG. 5 is used as an example.

Table 1

| Design 1 | RO indexes included in an RO group 0 | RO indexes included in an RO group 1 |
|---|---|---|
| SSB 0 | 0 and 1 | 3 and 4 |
| SSB 1 | 0 and 2 | 3 and 5 |
| SSB 2 | 1 and 2 | 4 and 5 |
| The radio access network device performs detection | Combined detection in 0 and 1, combined detection in 0 and 2, and combined detection in 1 and 2 | Combined detection in 3 and 4, combined detection in 3 and 5, and combined detection in 4 and 5 |
| Large quantity of times of blind detection, and low RACH delay | | |

Table 2

| Design 2 | RO indexes included in an RO group 0 | RO indexes included in an RO group 1 |
|---|---|---|
| SSB 0 | 0 and 3 | 1 and 4 |
| SSB 1 | 0 and 3 | 2 and 5 |
| SSB 2 | 1 and 4 | 2 and 5 |
| The radio access network device performs detection | Combined detection in 0 and 3, combined detection in 1 and 4, and combined detection in 2 and 5 | |
| Large quantity of times of blind detection, and low RACH delay | | |

As shown in Table 1, in Design 1, the radio access network device performs blind detection for a large quantity of times, but the RACH delay is low. As shown in Table 2, in Design 2, the radio access network device performs blind detection for a small quantity of times, but the RACH delay is high.

It may be understood that, for a shared (shared) RO, an RO group may be determined by using the method in the foregoing Design 1 or Design 2. For a separate (separate) RO, an RO group may also be determined by using the method in the foregoing Design 1 or Design 2. The shared RO may be understood as that both repetition and non-repetition are supported in the RO, and whether the repetition or the non-repetition is supported in the RO may be distinguished by using a preamble. The separate RO may be understood as that only repetition is supported in the RO and non-repetition (non-repetition) is not supported in the RO.

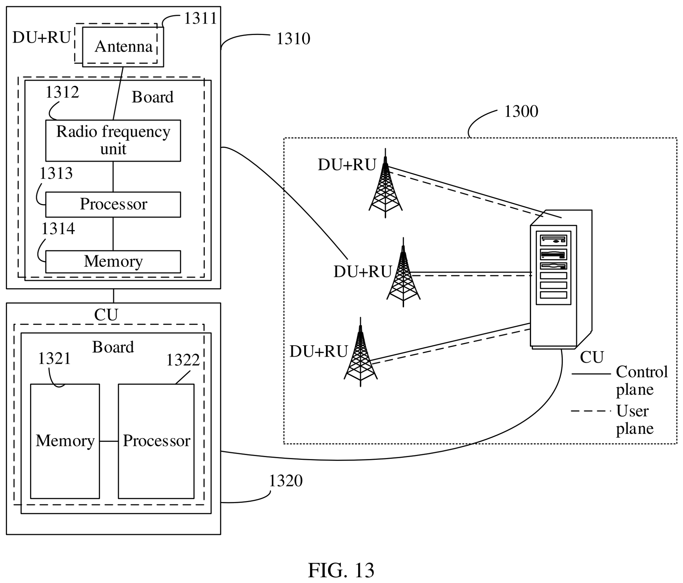

The following describes in detail communication apparatuses provided in embodiments of this application with reference to FIG. 10 and FIG. 13.

FIG. 10 is a block diagram of a communication apparatus 1000 according to an embodiment of this application. As shown in FIG. 10, the communication apparatus 1000 may include a transceiver unit 1010 and a processing unit 1020.

In a possible design, the communication apparatus 1000 may correspond to the terminal in the foregoing method embodiments, for example, may be the terminal or a component (for example, a chip or a chip system) configured in the terminal. The units in the apparatus 1000 may be configured to implement corresponding procedures performed by the terminal in the method 400 shown in FIG. 4. For example, the transceiver unit 1010 may be configured to perform step 410 in the method 400, and the processing unit 1020 may be configured to perform step 420 in the method 400. Specifically, the transceiver unit 1010 may be configured to receive configuration information from a radio access network device, where the configuration information is for configuring a quantity K of ROs in one RO group, and K is an integer greater than 1; and the processing unit 1020 may be configured to determine the K ROs based on the configuration information, where the K ROs are all associated with a same SSB index, the K ROs include at least two ROs, and the at least two ROs are further associated with different SSB indexes.

In another possible design, the communication apparatus 1000 may correspond to the radio access network device in the foregoing method embodiments, for example, may be the radio access network device or a component (for example, a chip or a chip system) configured in the radio access network device. The units in the apparatus 1000 may be configured to implement corresponding procedures performed by the radio access network device in the method 400 shown in FIG. 4. For example, the transceiver unit 1010 may be configured to perform step 410 in the method 400, and the processing unit 1020 may be configured to perform step 430 in the method 400. Specifically, the transceiver unit 1010 may be configured to send configuration information to a terminal, where the configuration information is for configuring a quantity K of ROs in one RO group, and K is an integer greater than 1; and the processing unit 1020 may be configured to determine the K ROs based on the configuration information, where the K ROs are all associated with a same SSB index, the K ROs include at least two ROs, and the at least two ROs are further associated with different SSB indexes.

It should be understood that, a specific process in which the units perform the foregoing corresponding steps is described in detail in the foregoing method embodiments, and for brevity, details are not described herein.

It should be further understood that, in embodiments of this application, division into the units is an example, is merely logical function division, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional module.

FIG. 11 is another block diagram of a communication apparatus 1100 according to an embodiment of this application.

As shown in FIG. 11, the apparatus 1100 may include at least one processor 1110, configured to implement the steps performed by the terminal or the steps performed by the radio access network device in the embodiment shown in FIG. 4.

The apparatus 1100 may further include at least one memory 1120, configured to store program instructions and/or data. The memory 1120 is coupled to the processor 1110. The coupling in this embodiment of this application may be an indirect coupling or a communication connection between apparatuses, units, or modules in an electrical form, a mechanical form, or another form, and is used for information exchange between the apparatuses, the units, or the modules. The processor 1110 and the memory 1120 may operate cooperatively. The processor 1110 may execute the program instructions stored in the memory 1120. At least one of the at least one memory may be included in the processor.

The communication apparatus 1100 may further include a communication interface 1130, configured to communicate with another device by using a transmission medium, so that the communication apparatus 1100 can communicate with the another device. The communication interface 1130 may be, for example, a transceiver, an interface, a bus, a circuit, or a device that can implement receiving and sending functions. The processor 1110 may receive and send data and/or information through the communication interface 1130, and is configured to implement the method performed by the terminal or the radio access network device in the embodiment shown in FIG. 4.

For example, when the apparatus 1400 is configured to implement the method performed by the terminal in the embodiment shown in FIG. 4, the processor 1110 may be configured to receive configuration information from a radio access network device, where the configuration information is for configuring a quantity K of ROs in one RO group, and K is an integer greater than 1; and determine the K ROs based on the configuration information, where the K ROs are all associated with a same SSB index, the K ROs include at least two ROs, and the at least two ROs are further associated with different SSB indexes.

For another example, when the apparatus 1100 is configured to implement the method performed by the radio access network device in the embodiment shown in FIG. 4, the processor 1110 may be configured to send configuration information to the terminal, where the configuration information is for configuring a quantity K of ROs in one RO group, and K is an integer greater than 1; determine the K ROs based on the configuration information, where the K ROs are all associated with a same SSB index, the K ROs include at least two ROs, and the at least two ROs are further associated with different SSB indexes; and receive a preamble in the K ROs.

A specific connection medium between the processor 1110, the memory 1120, and the communication interface 1130 is not limited in embodiments of this application. In this embodiment of this application, in FIG. 11, the processor 1110, the memory 1120, and the communication interface 1130 are connected through a bus 1140. The bus 1140 is represented by a bold line in FIG. 11, and a manner of connection between other components is merely described as an example, and constitutes no limitation. The bus may be classified into an address bus, a data bus, a control bus, and the like. For ease of representation, only one bold line is used to represent the bus in FIG. 11, but this does not mean that there is only one bus or only one type of bus.

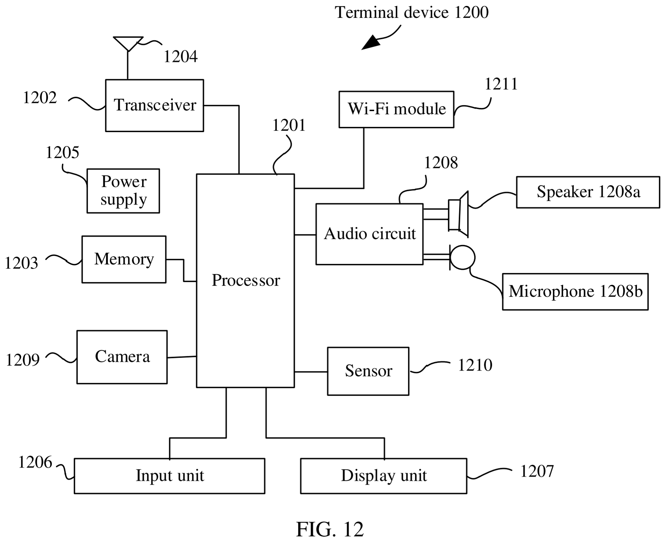

FIG. 12 is a diagram of a possible structure of a terminal 1200 according to an embodiment of this application.

The terminal may be used in the system shown in FIG. 1. As shown in FIG. 12, the terminal 1200 includes a processor 1201 and a transceiver 1202. Optionally, the terminal 1200 further includes a memory 1203. The processor 1201, the transceiver 1202, and the memory 1203 may communicate with each other by using an internal connection path, to transmit a control signal and/or a data signal. The memory 1203 is configured to store a computer program, and the processor 1201 is configured to invoke the computer program from the memory 1203 and run the computer program, to control the transceiver 1202 to receive a signal and send a signal. Optionally, the terminal 1200 may further include an antenna 1204, configured to send, by using a radio signal, uplink data or uplink control signaling output by the transceiver 1202.

The processor 1201 and the memory 1203 may be combined into one processing apparatus, and the processor 1201 is configured to execute program code stored in the memory 1203 to implement the foregoing functions. During specific implementation, the memory 1203 may alternatively be integrated into the processor 1201, or be independent of the processor 1201. The processor 1201 may correspond to the processor 1110 in FIG. 11 or the processing unit 1020 in FIG. 10.

The transceiver 1202 may correspond to the communication interface 1130 in FIG. 11 or the transceiver unit 1010 in FIG. 10. The transceiver 1202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal 1200 may further include a power supply 1205, configured to supply power to various devices or circuits in the terminal 1200.

In addition, to improve a function of the terminal device, the terminal 1200 may further include one or more of an input unit 1206, a display unit 1207, an audio circuit 1208, a camera 1209, a sensor 1210, and the like. The audio circuit may further include a speaker 1208a, a microphone 1208b, and the like.

It should be understood that, the terminal 1200 shown in FIG. 12 can implement processes related to the terminal in the method embodiment shown in FIG. 4. Operations and/or functions of modules in the terminal 1200 are respectively used to implement corresponding procedures in the foregoing method embodiments. For details, refer to the descriptions in the foregoing method embodiments. To avoid repetition, detailed descriptions are properly omitted herein.

FIG. 13 is a diagram of a structure of a radio access network device according to an embodiment of this application, for example, may be a diagram of a structure of a base station. A base station 1300 may be used in the system shown in FIG. 1, and performs the functions of the radio access network device in the foregoing method embodiments. As shown in the figure, the base station 1300 may include one or more of the following: one or more (DU+RU)s 1310 and one or more CUs 1320. The CU 1320 may communicate with a next generation core network (next generation core, NG core). The DU may include at least one antenna 1311, at least one radio frequency unit 1312, at least one processor 1313, and at least one memory 1314. The DU part is mainly configured to receive and send radio frequency signals, perform conversion between a radio frequency signal and a baseband signal, and perform partial baseband processing. The CU 1320 may include at least one processor 1322 and at least one memory 1321. The CU 1320 and the DU may communicate with each other through an interface. A control plane (control plane, CP) interface may be an Fs-C, for example, an F1-C. A user plane (user plane, UP) interface may be an Fs-U, for example, an F1-U. The DU and the RU may work together to implement functions of a physical (physical, PHY) layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher layer function of the PHY layer, and the RU is configured to implement a lower layer function and a radio frequency function of the PHY layer. The higher layer function of the PHY layer may include a part of the functions of the PHY layer, and the part of the functions is closer to a medium access control (medium access control, MAC) layer. The lower layer function of the PHY layer may include another part of the functions of the PHY layer, and the part of the functions is closer to an intermediate radio frequency side.

The CU 1320 is mainly configured to perform baseband processing, control a base station, and the like. The DU and the CU 1320 may be physically disposed together, or may be physically separated, that is, in a distributed base station. The CU 1320 is a control center of the base station, may correspond to the processing unit in FIG. 10 or the processor in FIG. 11, may also be referred to as a processing module, and is mainly configured to complete a baseband processing function. For example, the CU 1320 may be configured to control the base station to perform operation procedures related to the radio access network device in the foregoing method embodiments.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of protocol layers below the PDCP layer, for example, a radio link control (radio link control, RLC) layer and the MAC layer, are set on the DU. For another example, the CU implements functions of an RRC layer and a PDCP layer, and the DU implements functions of an RLC layer, a MAC layer, and a PHY layer.

In addition, optionally, the base station 1300 may include one or more radio frequency units (RUs), one or more DUs, and one or more CUs. The DU may include at least one processor 1313 and at least one memory 1314, the RU may include at least one antenna 1311 and at least one radio frequency unit 1312, and the CU may include at least one processor 1322 and at least one memory 1321.

In an instance, the CU 1320 may include one or more boards, and a plurality of boards may jointly support a radio access network (for example, a 5G network) of a single access standard, or may separately support radio access networks (for example, an LTE network, a 5G network, or another network) of different access standards. The memory 1321 and the processor 1322 may serve the one or more boards. In other words, a memory and a processor may be disposed on each board. Alternatively, a plurality of boards may share a same memory and a same processor. In addition, a necessary circuit may further be disposed on each board. The DU may include one or more boards, and a plurality of boards may jointly support a radio access network (for example, a 5G network) of a single access standard, or may separately support radio access networks (for example, an LTE network, a 5G network, or another network) of different access standards. The memory 1314 and the processor 1313 may serve the one or more boards. In other words, a memory and a processor may be disposed on each board. Alternatively, a plurality of boards may share a same memory and a same processor. In addition, a necessary circuit may further be disposed on each board.

It should be understood that, the base station 1300 shown in FIG. 13 can implement processes related to the radio access network device in the method embodiment shown in FIG. 4. Operations and/or functions of modules in the base station 1300 are respectively used to implement corresponding procedures in the foregoing method embodiments. For details, refer to the descriptions in the foregoing method embodiments. To avoid repetition, detailed descriptions are properly omitted herein.

It should be understood that, the base station 1300 shown in FIG. 13 is merely a possible architecture of the radio access network device, and should not constitute any limitation on this application. The method provided in this application is applicable to a network device in another architecture, for example, a radio access network device including a CU, a DU, and an AAU. A specific architecture of the radio access network device is not limited in this application.

It should be understood that, FIG. 13 is merely an example rather than a limitation, and the radio access network device may not depend on the structure shown in FIG. 13. For example, the radio access network device may also include an AAU, and may further include a CU and/or a DU; or the radio access network device may also include a BBU, and may further include an adaptive radio unit (adaptive radio unit, ARU). This is not limited in this application.

The CU and/or the DU may be configured to perform an action that is implemented inside the radio access network device and that is described in the foregoing method embodiments. The AAU may be configured to perform an action that is of the radio access network device sending information to or receiving information from the terminal and that is described in the foregoing method embodiments. For details, refer to the descriptions in the foregoing method embodiments. Details are not described herein again.

This application further provides a communication system, including the foregoing terminal and the foregoing radio access network device.

This application further provides a chip system. The chip system includes at least one processor, configured to implement functions in the method in the embodiment shown in FIG. 4, for example, receive or process data and/or information in the foregoing method.

In a possible design, the chip system further includes a memory, the memory is configured to store program instructions and data, and the memory is located inside or outside the processor.

The chip system may include a chip, or may include a chip and another discrete device.

This application further provides a computer-readable storage medium. The computer storage medium stores a computer program (which may also be referred to as code or instructions). When the computer program is run by a processor, the method in the embodiment shown in FIG. 4 is performed.

This application further provides a computer program product. The computer program product includes a computer program (which may also be referred to as code or instructions). When the computer program is run, a computer is caused to perform the method in the embodiment shown in FIG. 4.

It should be understood that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and methods described in this specification includes but is not limited to these and any memory of another proper type.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

In the foregoing embodiments, all or some of the functions of the functional units may be implemented by using software, hardware, firmware, or any combination thereof. When the software is used for implementation, all or some of the functions of the functional units may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid-state drive (solid-state drive, SSD)), or the like.

When functions provided in embodiments of this application are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

    receiving configuration information from a radio access network device, wherein the configuration information is for configuring a quantity K of random access channel occasions ROs in one RO group, and K is an integer greater than 1; and
    determining the K ROs based on the configuration information, wherein SSB indexes associated with all the K ROs are completely the same.

2. The method according to claim 1, wherein that the SSB indexes associated with all the K ROs are completely the same comprises: quantities of the SSB indexes associated with all the K ROs are the same and values of the associated SSB indexes are completely the same.

3. The method according to claim 1 or 2, wherein a same SSB index in each of the K ROs corresponds to a same index of a preamble group, and the index of the preamble group indicates an index of a 1st preamble in the preamble group.

4. The method according to any one of claims 1 to 3, wherein a quantity of SSB indexes associated with each of the K ROs is equal to a configured quantity of SSB indexes associated with one RO and the configured quantity is configured by the radio access network device.

5. The method according to any one of claims 1 to 3, wherein a quantity of SSB indexes associated with each of the K ROs is less than a configured quantity of SSB indexes associated with one RO and the configured quantity is configured by the radio access network device.

6. The method according to any one of claims 1 to 5, wherein a quantity of indexes of a plurality of SSBs sent by the radio access network device is not an integer multiple of a configured quantity of SSB indexes associated with one RO and the configured quantity is configured by the radio access network device.

7. A communication method, applied to a radio access network device, and the method comprising:

    sending configuration information to a terminal, wherein the configuration information is for configuring a quantity K of random access channel occasions ROs in one RO group, and K is an integer greater than 1;
    determining the K ROs based on the configuration information, wherein SSB indexes associated with all the K ROs are completely the same; and
    receiving a preamble in the K ROs.

8. The method according to claim 7, wherein that the SSB indexes associated with all the K ROs are completely the same comprises: quantities of the SSB indexes associated with all the K ROs are the same and values of the associated SSB indexes are completely the same.

9. The method according to claim 7 or 8, wherein a same SSB index in each of the K ROs corresponds to a same index of a preamble group, and the index of the preamble group indicates an index of a $1^{st}$ preamble in the preamble group.

10. The method according to any one of claims 7 to 9, wherein a quantity of SSB indexes associated with each of the K ROs is equal to a configured quantity of SSB indexes associated with one RO and the configured quantity is configured by the radio access network device.

11. The method according to any one of claims 7 to 9, wherein a quantity of SSB indexes associated with each of the K ROs is less than a configured quantity that is of SSB indexes associated with one RO and the configured quantity is configured by the radio access network device.

12. The method according to any one of claims 7 to 11, wherein a quantity of indexes of a plurality of SSBs sent by the radio access network device is not an integer multiple of a configured quantity of SSB indexes associated with one RO and the configured quantity is configured by the radio access network device.

13. A communication apparatus, comprising units configured to implement the method according to any one of claims 1 to 6, or comprising units configured to implement the method according to any one of claims 7 to 12.

14. A communication apparatus, comprising a processor and a memory, wherein

   the memory is configured to store a computer program; and
   the processor is configured to invoke the computer program, to cause the communication apparatus to perform the method according to any one of claims 1 to 6, or cause the communication apparatus to perform the method according to any one of claims 7 to 12.

15. A computer-readable storage medium, wherein the storage medium stores a computer program or instructions, and when the computer program or the instructions are executed by a computer, the method according to any one of claims 1 to 6 is implemented, or the method according to any one of claims 7 to 12 is implemented.

16. A computer program product, wherein the computer program product comprises instructions, and when the instructions are run by a computer, the method according to any one of claims 1 to 6 is implemented, or the method according to any one of claims 7 to 12 is implemented.

FIG. 1

FIG. 2

FIG. 3

<u>400</u>

| Terminal | | Radio access network device |
|---|---|---|

410: Configuration information

| 420: Determine K ROs | | 430: Determine the K ROs |
|---|---|---|

440: Send a preamble to the radio access network device in the K ROs

FIG. 4

RO index    0              1              2              3              4              5

| 0 | 1 | 2 | 0 | 1 | 2 | 0 | 1 | 2 | 0 | 1 | 2 |
|---|---|---|---|---|---|---|---|---|---|---|---|

K ROs: RO 0 and RO 1

FIG. 5

EP 4 694 001 A1

RO index  0        1        2        3        4        5        6        7        8        9

| 1 2 3 4 | 5 6 7 8 | 9 10 1 2 | 3 4 5 6 | 7 8 9 10 | 1 2 3 4 | 5 6 7 8 | 9 10 1 2 | 3 4 5 6 | 7 8 9 10 |

K ROs: RO 0, RO 2, and RO 5

FIG. 6

FIG. 7

EP 4 694 001 A1

EP 4 694 001 A1

RO
index    0        1        5        6        4        5        6        7        8        9

| 1 2 3 4 | 5 1 2 3 | 4 5 1 2 | 3 4 5 1 | 2 3 4 5 | 1 2 3 4 | 5 1 2 3 | 4 5 1 2 | 3 4 5 1 | 2 3 4 5 |

| 1 2 3 4 | 1 2 3 5 | 1 2 4 5 | 1 3 4 5 | 2 3 4 5 | 1 2 3 4 | 1 2 3 5 | 1 2 4 5 | 1 3 4 5 | 2 3 4 5 |

n  0 1 2 3  0 1 2 3  0 1 2 3  0 1 2 3  0 1 2 3  0 1 2 3  0 1 2 3  0 1 2 3  0 1 2 3  0 1 2 3

| 1 2 3 4 | 1 2 3 5 | 1 2 4 5 | 1 3 4 5 | 2 3 4 5 | 1 2 3 4 | 1 2 3 5 | 1 2 4 5 | 1 3 4 5 | 2 3 4 5 |

n=0        n=0        n=0        n=0                    n=0        n=0        n=0        n=0

| 1 2 3 4 | 1 2 3 5 | 1 2 4 5 | 1 3 4 5 | 2 3 4 5 | 1 2 3 4 | 1 2 3 5 | 1 2 4 5 | 1 3 4 5 | 2 3 4 5 |

   n=1        n=1                    n=0                                                n=0

| 1 2 3 4 | 1 2 3 5 | 1 2 4 5 | 1 3 4 5 | 2 3 4 5 | 1 2 3 4 | 1 2 3 5 | 1 2 4 5 | 1 3 4 5 | 2 3 4 5 |

                              n=1        n=1

| 1 2 3 4 | 1 2 3 5 | 1 2 4 5 | 1 3 4 5 | 2 3 4 5 | 1 2 3 4 | 1 2 3 5 | 1 2 4 5 | 1 3 4 5 | 2 3 4 5 |

| 1 2 3 4 | 1 2 3 5 | 1 2 4 5 | 1 3 4 5 | 2 3 4 5 | 1 2 3 4 | 1 2 3 5 | 1 2 4 5 | 1 3 4 5 | 2 3 4 5 |

                n=3        n=3

FIG. 8

RO
index   0        1        2        3        4        5        6        7

| 0 | 1 | 2 | 0 | 1 | 2 | 0 | 1 | 2 | 0 | 1 | 2 | 0 | 1 | 2 |

FIG. 9

Communication
apparatus 1000

Transceiver unit 1010

Processing unit 1020

FIG. 10

Communication apparatus 1100

— 1130

Communication
interface

— 1110

Processor

— 1140

— 1120

Memory

FIG. 11

FIG. 12

FIG. 13

## INTERNATIONAL SEARCH REPORT

| International application No. |
| --- |
| **PCT/CN2024/084339** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, CJFD, VEN, ENTXT, 3GPP: RO, 随机接入信道时机, PRACH, RACH, 随机接入信道, 组, 集, 重复, 次, 数, 个, SSB, 同步信号块, 配置, 设置, random access channel occasion, random access channel, group, set, repeat+, time, number, synchronization signal block, configurat+, set+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112042256 A (ZTE CORP.) 04 December 2020 (2020-12-04) entire document | 1-16 |
| A | CN 114390714 A (DATANG MOBILE COMMUNICATIONS EQUIPMENT CO., LTD.) 22 April 2022 (2022-04-22) entire document | 1-16 |
| A | CN 112369104 A (ZTE CORP.) 12 February 2021 (2021-02-12) entire document | 1-16 |
| A | WO 2021127962 A1 (QUALCOMM INC. et al.) 01 July 2021 (2021-07-01) entire document | 1-16 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 June 2024** | **28 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084339**

| Patent document cited in search report | | | Publication date (day/month/year) | Patent family member(s) | | | Publication date (day/month/year) |
|---|---|---|---|---|---|---|---|
| CN | 112042256 | A | 04 December 2020 | WO | 2019140344 | A1 | 18 July 2019 |
| | | | | US | 2020344815 | A1 | 29 October 2020 |
| | | | | US | 10849167 | B2 | 24 November 2020 |
| | | | | CA | 3088315 | A1 | 18 July 2019 |
| | | | | CA | 3088315 | C | 05 September 2023 |
| | | | | KR | 20200100853 | A | 26 August 2020 |
| | | | | KR | 102384613 | B1 | 08 April 2022 |
| | | | | ES | 2957413 | T3 | 18 January 2024 |
| | | | | JP | 2021510967 | A | 30 April 2021 |
| | | | | JP | 7102530 | B2 | 19 July 2022 |
| | | | | EP | 3738385 | A1 | 18 November 2020 |
| | | | | EP | 3738385 | A4 | 10 March 2021 |
| | | | | EP | 3738385 | B1 | 09 August 2023 |
| | | | | EP | 4236184 | A2 | 30 August 2023 |
| | | | | EP | 4236184 | A3 | 22 November 2023 |
| | | | | US | 2021068165 | A1 | 04 March 2021 |
| | | | | AU | 2019206672 | A1 | 06 August 2020 |
| | | | | AU | 2019206672 | B2 | 04 November 2021 |
| | | | | AU | 2019206672 | C1 | 14 April 2022 |
| CN | 114390714 | A | 22 April 2022 | None | | | |
| CN | 112369104 | A | 12 February 2021 | None | | | |
| WO | 2021127962 | A1 | 01 July 2021 | EP | 4082285 | A1 | 02 November 2022 |
| | | | | EP | 4082285 | A4 | 13 December 2023 |
| | | | | WO | 2021129555 | A1 | 01 July 2021 |
| | | | | US | 2023164845 | A1 | 25 May 2023 |

Form PCT/ISA/210 (patent family annex) (July 2022)

**REFERENCES CITED IN THE DESCRIPTION**

**Patent documents cited in the description**

- CN 202310401607X